# EUROPÄISCHE PATENTANMELDUNG

(11) **EP 2 135 580 A1**
(43) Veröffentlichungstag der Anmeldung: **23.12.2009**
(21) Anmeldenummer: 08011210.5
(22) Anmeldetag: 20.06.2008
(51) Int. Cl.: A61C 17/22

(54) **Elektrische Zahnbürste**

(71) Anmelder: Braun GmbH, 61476 Kronberg/Taunus (DE)
(72) Erfinder: Kreßner, Gerhard, 63674 Altenstadt (DE)

(57) **Zusammenfassung**

Die Erfindung betrifft einerseits ein Aufsatzteil insbesondere in Form einer Aufsatzbürste für eine solche elektrische Zahnbürste, mit einem Arbeitskopf, einem mit dem Arbeitskopf verbundenen, rohrförmigen Anschlussstück zum Anschließen an einen Handteilhals eines Zahnbürstenhandteils sowie einer Antriebswelle zum Antreiben des Arbeitskopfs. Andererseits betrifft die Erfindung das Zahnbürstenhandteil einer solchen elektrischen Zahnbürste, mit einem Griffteil, einem Handteilhals, der eine Kupplungseinrichtung zum Ankuppeln eines Aufsatzteils insbesondere in Form einer Aufsatzbürste aufweist, sowie mit einer Antriebswelle zum Antreiben des Aufsatzteils, die ein Wellenkupplungsstück zum Ankuppeln an die aufsatzteilseitige Antriebswelle aufweist. Das rohrförmige Anschlußstück des Aufsatzteils besitzt ein Innenrastelement, das derart ausgebildet und angeordnet ist, dass es beim Aufsetzen des Aufsatzteils auf den Handteilhals in den Innenraum des Handteilhalses einfährt und an einer lnnenkontur des genannten Handteilhalses verrastet. Das Zahnbürstenhandteil zeichnet sich entsprechend dadurch aus, dass der Handteilhals innen liegende lnnenrastmittel zur Verrastung mit dem in den Innenraum des Handteilhalses einfahrenden lnnenrastelements des Aufsatzteils aufweist.

## Beschreibung

Die vorliegende Erfindung betrifft eine elektrische Zahnbürste. Die Erfindung betrifft dabei einerseits ein Aufsatzteil, beispielsweise eine Aufsatzbürste, für eine solche elektrische Zahnbürste, mit einem Arbeitskopf, einem mit dem Arbeitskopf verbundenen, rohrförmigen Anschlussstück zum Anschließen an einen Handteilhals eines Zahnbürstenhandteils sowie einer Antriebswelle zum Antreiben des Arbeitskopfs. Andererseits betrifft die Erfindung das Zahnbürstenhandteil einer solchen elektrischen Zahnbürste, mit einem Griffteil, einem Handteilhals, der eine Kupplungseinrichtung zum Ankuppeln eines Aufsatzteils, beispielsweise einer Aufsatzbürste, sowie eine Antriebswelle zum Antreiben des Aufsatzteils aufweist, die ein Wellenkupplungsstück zum Ankuppeln an die aufsatzteilseitige Antriebswelle aufweist.

Elektrische Zahnbürsten besitzen üblicherweise abnehmbare und austauschbare Aufsatzbürsten, damit ein gemeinsames Handteil von mehreren Familienmitgliedern mit jeweils einer persönlichen Aufsatzbürste verwendet werden kann bzw. bei Verschleiß der Aufsatzbürste nur diese und nicht die gesamte elektrische Zahnbürste ausgetauscht werden muss. Dabei sind von der Kupplung zwischen Aufsatzbürste und Handteil verschiedene Kräfte zu übertragen, so insbesondere die Putz-, Antriebs-, Axial- und Radialkräfte, die auf die Aufsatzbürste bzw. in Form von Reaktionskräften auf das Handteil wirken. Die Ankopplung der Aufsatzbürste an den Handteilhals ist dabei üblicherweise so gelöst, dass die Radialkräfte im Handteilhals und die Axialkräfte in der Antriebswelle aufgenommen bzw. abgetragen werden. Hierzu wird üblicherweise das rohrförmige Anschlussstück der Aufsatzbürste auf den Zahnbürstenhals geschoben und die in dem Bürstenrohr der Aufsatzbürste vorgesehene Antriebswelle mit der stirnseitig aus dem Handteilhals herausragenden Antriebswelle gekuppelt. Ein Beispiel hierfür ist die EP 0500537 B1, gemäß der der Handteilhals und dementsprechend komplementär das rohrförmige Anschlussstück mit einem von der Kreisform abweichenden Querschnitt versehen sind, um Radialkräfte besser aufnehmen zu können. Um die Axialkräfte übertragen zu können, kann die Antriebswelle im Bürstenrohr auf die handteilseitige Antriebswelle aufgesteckt und mittels einer Verrastung gesichert werden.

Die WO 00/76420 A1 schlägt für eine solche elektrische Zahnbürste vor, sowohl das axiale Fixieren als auch das Fixieren gegen Verdrehen am Handteilhals zu bewerkstelligen. Hierzu sind in dem rohrförmigen Anschlussstück der Aufsatzbürste sägezahnförmige Gummilippen vorgesehen, die auf den von der Kreisform abweichenden Handteilhals aufgeschoben werden können. Zusätzlich sind an dem rohrförmigen Anschlussstück Rastzungen vorgesehen, die über die Außenumfangsfläche des Handteilhalses geschoben und dort verrastet werden können, wodurch eine zusätzliche Sicherung gegen axiales Abziehen erzielt werden soll. Durch Verschmutzen des Handteilhalses am Außenumfang beispielsweise durch Zahnpastareste und dergleichen ist die zusätzliche Axialsicherung durch diese Verrastung jedoch begrenzt. Zudem wird bisweilen der Zahnbürstenhals mit den Fingern gegriffen, wodurch äußerer Druck auf die Verrastung ein unbeabsichtigtes Lösen bewirken kann.

Weiterhin schlägt die US 6,836,917 eine elektrische Zahnbürste vor, die am Zahnbürstenhals eine L-förmige Nut aufweist, in die ein an dem aufschiebbaren Anschlussstück der Aufsatzbürste vorgesehener Stift einfährt, so dass die Aufsatzbürste nach Art eines Bajonettverschlusses durch Aufstecken und Verdrehen gesichert werden kann. Zusätzlich ist eine Verrastung der Antriebswellen vorgesehen. Durch Radialkräfte kann es jedoch zu einem unbeabsichtigten Lösen des Bajonettverschlusses kommen, wenn diese die Aufsatzbürste sozusagen in dem richtigen Drehsinn gegenüber dem Handteil verdrehen, so dass zusätzliche Sicherungsmaßnahmen notwendig sind.

Aus der DE 102 09 320 A1 ist ferner eine elektrische Zahnbürste bekannt, bei der lediglich ein Zahnbürstenkopf austauschbar am Handteil verrastet werden kann, d.h. der Zahnbürstenkopf weist keine Antriebswelle zum Antreiben desselben auf. Stattdessen ist eine handteilseitige Antriebswelle in den Zahnbürstenkopf einzufädeln, was bisweilen Probleme bereiten kann und eine besondere Antriebsbewegung der Antriebswelle voraussetzt.

Hiervon ausgehend liegt der vorliegenden Erfindung die Aufgabe zugrunde, eine verbesserte elektrische Zahnbürste, ein verbessertes Aufsatzteil und/oder ein verbessertes Handteil für eine solche elektrische Zahnbürste zu schaffen, die Nachteile des Standes der Technik vermeiden und Letzteren in vorteilhafter Weise weiterbilden. Insbesondere soll eine einfach zu bedienende Kupplung zwischen Aufsatzteil und Handteil geschaffen werden, die die auftretenden Axial- und Radialkräfte sicher aufnimmt, das Aufsatzteil fest und möglichst spielfrei auf dem Handteil hält und dennoch ein einfaches Lösen der Kupplung zulässt.

Diese Aufgabe wird durch ein Aufsatzteil gemäß Anspruch 1, ein Zahnbürstenhandteil gemäß Anspruch 28, eine elektrische Zahnbürste gemäß Anspruch 49 sowie eine Kupplung gemäß Anspruch 50 gelöst. Bevorzugte Ausgestaltungen sind Gegenstand der abhängigen Ansprüche.

Es wird also vorgeschlagen, daß die zwischen dem Aufsatzteil und dem Handteil wirkenden Radial- und Axialkräfte am Handteilhals angreifen sollen, und eine hierfür vorgesehene Verbindung zwischen dem rohrförmigen Anschlussstück des Aufsatzteils und dem Handteilhals in das Innere des Handteilhalses zu verlegen. Das rohrförmige Anschlussstück des Aufsatzteils besitzt ein Element zur form- und/oder kraftschlüssigen Verbindung des Aufsatzteils mit dem Handteil. Vorzugsweise besitzt das rohrförmige Anschlussstück des Aufsatzteils ein Innenrastelement, das derart ausgebildet und angeordnet ist, dass es beim Aufsetzen des Aufsatzteils auf den Handteilhals in den Innenraum des Handteilhalses einfährt und an einer Innenkontur des genannten Handteilhalses verrastet. Das Zahnbürstenhandteil zeichnet sich entsprechend dadurch aus, dass der Handteilhals innen liegende Innenrastmittel zur Verrastung mit dem in den Innenraum des Handteilhalses einfahrenden Innenrastelement des Aufsatzteils aufweist. Durch die Verrastung im Inneren des Handteilhalses können Axialkräfte sicher aufgenommen werden, was auch eine spezielle Ausbildung der Schnittstelle der Antriebswellen des Handteils und des Aufsatzteiles ermöglicht, da diese nicht mehr zwangsweise Abziehkräfte auffangen muss. Dabei ist eine sichere Verrastung bei geringerer Verschmutzungsgefahr der Rastflächen und ohne Beeinträchtigungen durch äußeren Druck auf den Zahnbürstenhals möglich, die sowohl Axialkräfte als auch Radialkräfte aufnehmen kann. Bei einer anderen Ausführung besitzt das rohrförmige Anschlußstück des Aufsatzteils ein Innenklemmelement, das derart ausgebildet und angeordnet ist, dass es beim Aufsetzen des Aufsatzteils auf den Handteilhals in den Innenraum des Handteilhalses einfährt und an einer Innenkontur des genannten Handteilhalses verklemmt. Das Zahnbürstenhandteil zeichnet sich entsprechend dadurch aus, dass der Handteilhals eine innen liegende Kontur zum Verklemmen mit dem in den Innenraum des Handteilhalses einfahrenden Innenklemmelement des Aufsatzteils aufweist. Bei einer weiteren Ausführung besitzt das rohrförmige Anschlußstück des Aufsatzteils ein Innenrast- und -klemmelement, das derart ausgebildet und angeordnet ist, dass es beim Aufsetzen des Aufsatzteils auf den Handteilhals in den Innenraum des Handteilhalses einfährt und an einer Innenkontur des genannten Handteilhalses verrastet und verklemmt. Das Zahnbürstenhandteil zeichnet sich entsprechend dadurch aus, dass der Handteilhals eine innen liegende Kontur zum Verrasten und Verklemmen mit dem Innenrast- und -klemmelement des Aufsatzteils aufweist.

Die nachfolgende Beschreibung ist so zu verstehen, daß die Kupplung zwischen der elektrischen Zahnbürste und ihrem Handteil anhand einer form- und/oder kraftschlüssigen Verbindung ausgeführt sein kann, und zwar auch dann, wenn in der Beschreibung explizit nur formschlüssige Kupplungsmittel, beispielsweise Verrastungsmittel, beschrieben sind.

Die im Innenraum des Handteilhalses liegende Innenverrastung zwischen rohrförmigem Anschlussstück des Aufsatzteils und Handteilhals kann unterschiedlich ausgebildet sein. Vorteilhafterweise kann das Innenrastelement des Aufsatzteils eine sich zur Stirnseite des Anschlußstücks hin erstreckende, beispielsweise zum Zahnbürstenhandteil hin auskragende Rastzunge aufweisen, die eine an die Innenkontur des Handteilhalses formangepasste Rastkontur besitzt, die beispielsweise als Rastsenke oder als Rastvorsprung ausgebildet sein kann. Insbesondere kann die genannte Rastzunge einen Rasthaken bilden, der an seinem Ende einen hakenförmigen Rastvorsprung besitzt, der an einer dazu komplementär ausgebildeten Rastkontur im Inneren des Handteilhalses verrasten kann.

Die Ausrichtung der Rastkontur an der besagten Rastzunge kann hierbei unterschiedlich gewählt sein. Beispielsweise könnte eine Orientierung der Rastkontur in Umfangsrichtung vorgesehen sein, so dass durch ein Wegfedern der Rastzunge in Umfangsrichtung beim axialen Aufschieben ein Verrasten erfolgen könnte. Vorzugsweise jedoch ist die Rastkontur auf der radial nach außen gewandten Seite der Rastzunge vorgesehen.

Die genannte Rastzunge bildet dabei vorteilhafterweise einen Federbügel, der sich etwa in Längsrichtung des rohrförmigen Anschlussstücks des Aufsatzteils erstreckt und quer zur genannten Längsrichtung elastisch verformbar ausgebildet ist. In Verbindung mit der zuvor genannten Anordnung der Rastkontur auf der Rastzungenaußenseite kann hierdurch eine Verrastung einfach dadurch erfolgen, dass beim axialen Aufschieben des Aufsatzteils auf den Handteilhals in radialer Richtung zunächst wegfedert, bis sie die komplementäre Rastkontur im Innenraum des Handteilhalses erreicht hat, so dass sie dann bei vollständig aufgeschobener Stellung durch Zurückfedern verrasten kann.

Durch eine bezüglich der Längsrichtung des rohrförmigen Anschlussstücks hinterschnittene Ausbildung des Innenrastelements kann eine besonders einfache Bedienung erzielt werden. Das Aufsatzteil braucht lediglich axial etwa parallel zur Längsrichtung des rohrförmigen Anschlussstücks bzw. des Handteilhalses aufgeschoben werden, wodurch die Verrastung verriegelt werden kann. Umgekehrt ist die Verrastung durch axiales Abziehen der Aufsatzbürste wieder lösbar.

Um einerseits eine feste Verrastung, die hohe Axialkräfte abfangen kann, und andererseits ein leichtes Lösen der Verrastung beim Abziehen der Aufsatzbürste zu ermöglichen, kann dem Innenrastelement des Aufsatzteils eine zur Längsrichtung des rohrförmigen Anschlussstücks spitzwinklig geneigte Ausrastschräge vorzugsweise in Form einer Keilfläche zugeordnet sein, über die die verriegelnden Rastkonturen voneinander gelöst werden können. Die Rastkonturen selbst können hierbei gleichzeitig derart ausgebildet sein, dass sie auch höheren Kräften widerstehen können, so beispielsweise in Form quer zur Längsrichtung verlaufender Rastflächen.

Trotz der genannten Innenverrastung des Aufsatzteils auf dem Handteilhals ist es vorteilhaft vorzusehen, dass das Aufsatzteil auf die Außenumfangsfläche des Handteilhalses aufgeschoben wird. Dazu ist am rohrförmigen Anschlussstück des Aufsatzteiles ein Außenkupplungsteil zum Aufsetzen auf die Außenseite des Handteilhalses vorgesehen. Das genannte Außenkupplungsteil bildet ein Umschlingungsstück, das den Handteilhals auf dessen Außenseite umschlingt. Hierdurch kann eine kippfeste und auch drehfeste Verbindung zwischen Aufsatzteil und Zahnbürstenhandteil geschaffen werden, die auch höhere Putzkräfte übertragen kann.

Das genannte Außenkupplungsteil kann hierbei ein vorteilhafterweise eine Formschluss-Passfläche bildendes Innenmantelflächenstück umfassen, gegenüber dem das Innenrastelement des Aufsatzteils radial nach innen zurückgesetzt bzw. durch einen Spalt beabstandet ist, in den beim Aufstecken des Aufsatzteils eine Handteilhalswandung einfahren kann. Die Handteilhalswandung wird also sozusagen von beiden Seiten her umfangen. Über die Außenumfangsfläche des Handteilhalses wird das Außenkupplungsteil des Anschlussstücks gefahren, während das Innenrastelement des Anschlussstücks auf einer Innenseite des Handteilhalses in diesen einfährt.

Handteilseitig können unterschiedlich ausgebildete Innenrastmittel vorgesehen sein. Ist in der zuvor genannten Weise am Aufsatzteil eine Federrastzunge in Form eines Federbügels vorgesehen, können die Innenrastmittel am Handteil in Form einer ortsfest am Handteilhals vorgesehenen Rastkontur ausgebildet sein, die vorteilhafterweise in Längsrichtung des Handteils hinterschnitten ausgebildet ist und in geeigneter Weise an die Rastkontur der genannten Rastzunge formangepasst ist. Insbesondere kann ein radial nach innen vorspringender Rastvorsprung an der Innenmantelfläche des Handteilhalses angeformt sein.

Alternativ oder zusätzlich können die Innenrastmittel im Innenraum des Handteilhalses auch eine Rastzunge vorzugsweise in Form eines elastischen Federbügels aufweisen, der sich im Wesentlichen parallel zur Längsrichtung des Handteilhalses erstreckt und quer zu der genannten Längsrichtung elastisch verformbar ausgebildet ist. Diese Rastzunge kann beim Aufschieben des Aufsatzteiles in axialer Richtung über das Innenrastelement des Aufsatzteiles unter elastischer Verformung hinweggleiten, bis es in der vollständig aufgeschobenen Stellung unter Zurückfedern einrastet. Vorzugsweise kann eine solche Rastzunge im Innenraum des Handteilhalses derart ausgebildet sein, dass sie in radialer Richtung wegfedern und durch entsprechendes Zurückfedern in radialer Richtung einrasten kann.

Bei weiteren Ausführungen können in an sich bekannter Weise an den Wellenkupplungsstücken der handteilseitigen Antriebswelle und der Antriebswelle des Aufsatzteiles Rastmittel vorgesehen sein, mittels derer die Antriebswellen miteinander verrastet werden können. Die genannten Rastmittel sind hierbei vorteilhafterweise derart ausgebildet, dass sie durch axiales Aufeinanderstecken der Antriebswellen bzw. Wellenkupplungsstücke verrasten und gelöst werden können. Vorteilhafterweise kann hierzu an einem Wellenkupplungsstück ein sich in Wellenlängsrichtung erstreckender Rastbügel mit einer geeigneten Rastkontur vorgesehen sein, der in eine dazu komplementäre Rastkontur am anderen Wellenkupplungsstück einrasten kann.

Alternativ oder zusätzlich zu einer solchen Verrastung der Wellenkupplungsstücke können die genannten Wellenkupplungsstücke jedoch auch eine konische Passung aufweisen, d.h. insbesondere können an den Wellenkupplungsstücken zueinander komplementäre konische Klemmpassflächen vorgesehen sein, die durch axiales Aufeinanderstecken der Wellenkupplungsstücke eine spielfreie Passung erzielen können. Durch die Verrastung des Aufsatzteils am Handteilhals müssen über die Antriebswellenkupplung nicht zwangsweise Axialkräfte übertragen werden, so dass der Schrägungswinkel der konischen bzw. geneigten Klemmpassflächen auch größer ausgebildet werden kann, insbesondere auch so groß, dass keine Selbsthemmung mehr stattfindet. Vorteilhafterweise können an den Klemmpassflächen Schrägungswinkel von mehr als etwa 7° zur Antriebswellenlängsachse vorgesehen werden. Hierdurch kann auch durch nur kurze axiale Kupplungswege eine spielfreie Kupplung erzielt werden, wobei die Axialkräfte in einfacher Weise über die Verrastung am Handteilhals oder ggf. auch eine zusätzlich an den Wellenkupplungsstücken vorgesehene Verrastung aufgefangen werden können.

Die aufsatzteilseitige und/oder die handteilseitige Antriebswelle bzw. das damit jeweils verbundene Wellenkupplungsstück kann axial beweglich gelagert sein, wobei vorteilhafterweise der jeweiligen Antriebswelle und/oder dem damit verbundenen Wellenkupplungsstück eine Vorspannvorrichtung zugeordnet ist, mittels derer das aufsatzseitige Wellenkupplungsstück auf das Handteil oder alternativ das handteilseitige Wellenkupplungsstück auf das Aufsatzteil zu vorgespannt wird. Insbesondere kann die genannte Vorspannvorrichtung eine Federeinrichtung umfassen, die zwischen dem Wellenkupplungsstück und der zugehörigen Antriebswelle vorgesehen ist. Insbesondere kann das Wellenkupplungsstück über eine Druckfeder an der Antriebswelle abgestützt sein, so dass das Wellenkupplungsstück beim Aufeinanderfahren von Aufsatzteil und Handteil sozusagen ein wenig gestaucht wird. Hierdurch lässt sich in besonders vorteilhafter Weise eine spielfreie Kupplung der Antriebswellen von Aufsatzteil und Handteil erzielen. Die genannte Vorspannung ist hierbei in Verbindung mit konisch ausgebildeten Klemmpassflächen und in Verbindung mit der zuvor beschriebenen Innenverrastung des Aufsatzteils am Handteilhals besonders vorteilhaft, kann ggf. jedoch auch unabhängig hiervon in vorteilhafter Weise eingesetzt werden, um eine spielfreie, feste und einfach zu lösende Kupplung der beiden Antriebswellen zu erzielen.

Das Außenkupplungsstück des rohrförmigen Anschlussstücks kann dabei einen Aufsteckring bilden, der auf den Zahnbürstenhals bzw. dessen Außenmantelfläche aufgesteckt werden kann, wobei der genannte Aufsteckring vorteilhafterweise geschlossen ausgebildet sein kann. Der Aufsteckring kann vorteilhafterweise konisch ausgebildet und an eine konische Außenmantelfläche des Handteilhalses angepasst sein.

An dem rohrförmigen Anschlussstück des Aufsatzteils kann aber auch ein vorzugsweise schalenförmig ausgebildetes Kupplungsstück vorgesehen sein, welches an ein vorzugsweise halbschalenförmig ausgebildetes Kupplungsstück am Handteilhals angesetzt werden kann. Die beiden schalenförmigen bzw. halbschalenförmigen Kupplungsstücke ergänzen einander sozusagen zu einem vollständigen Handteilhals bzw. Anschlussstück, wodurch insbesondere auch Kräfte in Umfangsrichtung, die ein Verdrehen des Aufsatzteils auf dem Handteil bewirken würden, sicher abgefangen werden können. Zudem kann eine im Durchmesser besonders kleinbauende Ausbildung erzielt werden.

Am Handteilhals kann eine Kupplungseinrichtung mit einem Kupplungsstück vorgesehen sein, das zur form- und/oder reibschlüssigen Verriegelung mit dem Anschlussstück der Aufsteckbürste in Handteillängsrichtung bewegbar ist. Das Kupplungsstück wird vorzugsweise durch ein Federelement axial vom Griffteil des Zahnbürstenhandteils weggedrückt, so dass bei nicht aufgesetztem Aufsatzteil das Kupplungsstück sich in einer definierten Stellung relativ zum Handteil befindet, in der das Aufsatzteil ungehindert aufgesetzt werden kann.

Die Kupplungseinrichtung am Handteilhals arbeitet vorteilhafterweise mit einer axialen Bewegung in Handteillängsrichtung sowie einer Querbewegung quer zur Handteillängsrichtung, wobei vorteilhafterweise die Axialbewegung in Handteillängsrichtung die Betätigung der Kupplungseinrichtung und die Querbewegung die Verriegelung bewirkt. Das Zahnbürstenhandteil zeichnet sich dadurch aus, dass seine Kupplungseinrichtung ein in Handteillängsrichtung axial bewegbares Kupplungsstück aufweist, das derart gelagert und/oder derart ausgebildet ist, dass eine axiale Bewegung des Kupplungsstücks eine Querbewegung des Eingriffsteils der Kupplungseinrichtung quer zur Handteillängsrichtung erzeugt.

Die axiale Betätigungsbewegung kann hierbei vorteilhafterweise durch das Aufsatzteil bei dessen Aufsetzen bzw. Abziehen auf den bzw. von dem Handteilhals erzeugt werden. Das Aufstecken bzw. Abziehen des Aufsatzteils kann sozusagen dazu genutzt werden, eine quer hierzu gerichtete Verriegelungsbewegung bzw. Entriegelungsbewegung der handteilseitigen Kupplungseinrichtung zu erzeugen. Gemäß einem weiteren Aspekt zeichnet sich das Aufsatzteil dabei dadurch aus, dass sein Kupplungsteil an einer Innenmantelfläche eine nach außen gerichtete Vertiefung, in die das Eingriffsteil des handteilseitigen Kupplungsstücks einfahrbar ist, sowie eine Stoßfläche zum axialen Zurückstoßen des handteilseitigen Kupplungsstücks beim Aufsetzen des Anschlussstücks auf den Handteilhals aufweist. Die genannte Stoßfläche an dem Kupplungsteil des Aufsatzteils ist dabei vorteilhafterweise hinsichtlich Form und Lage derart an das handteilseitige Kupplungsstück angepasst, dass die Stoßfläche das Kupplungsstück des Zahnbürstenhandteils beim Aufeinandersetzen von Aufsatzteil und Zahnbürstenhandteil einfängt und axial zum Griffteil des Zahnbürstenhandteils hin zurückschiebt, so dass die Verriegelung sozusagen automatisch beim Aufsetzen des Aufsatzteiles bewirkt wird.

Um die die Verriegelung bewirkende Querbewegung des Eingriffsteils der handteilseitigen Kupplungseinrichtung zu bewirken, kann zwischen dem Handteilhals und dem Kupplungsstück des Zahnbürstenhandteils ein Spreizmechanismus vorgesehen sein, durch den das vorgenannte Eingriffsteil der handteilseitigen Kupplungseinrichtung bei axialer Bewegung des genannten Kupplungsstücks auf den Handteilkorpus zu quer zur Handteillängsrichtung nach außen gespreizt wird. Vorteilhafterweise ist es hierbei das Kupplungsstück selbst, das von dem genannten Spreizmechanismus bei entsprechender Axialbewegung nach außen gespreizt wird, so dass das genannte Eingriffsteil unmittelbar an dem Kupplungsstück vorgesehen, vorzugsweise integral einstückig daran angeformt sein kann.

Der Kupplungseinrichtung kann eine vorzugsweise mechanisch arbeitende Steuereinrichtung zugeordnet sein, die den Zahnbürstenantrieb in Abhängigkeit der Stellung der Kupplungseinrichtung steuert. Insbesondere kann die Steuereinrichtung Hemmmittel aufweisen, die den Zahnbürstenantrieb blockieren, abschalten bzw. hemmen oder bremsen, wenn der Eingriffsabschnitt der Kupplungseinrichtung nicht in seiner Verriegelungsstellung ist. Hierdurch kann verhindert werden, dass sich der Zahnbürstenantrieb bewegt, wenn die Aufsatzbürste nicht richtig auf dem Handteil sitzt, wodurch insbesondere eine von einer rotierenden Antriebswelle ausgehenden Verletzungsgefahr unterbunden werden kann. Die genannten Hemmmittel können dabei grundsätzlich verschieden ausgebildet sein, wobei grundsätzlich denkbar wäre, die Hemmmittel steuerungs- bzw. softwaretechnisch auszubilden. Alternativ oder zusätzlich kann auch eine mechanische Ausbildung der Hemmmittel vorgesehen sein, wobei vorteilhafterweise die Hemmmittel eine Eingriffsfläche an dem Kupplungsstück umfassen können, die in der Nicht-Verriegelungsstellung des Kupplungsstücks mit einer Antriebswelle des Handteils in Eingriff gelangen kann, insbesondere auf die Antriebswelle gedrückt werden kann. Insbesondere können die Hemmmittel aufeinanderfahrbare Abflachungen an der Antriebswelle und dem genannten handteilseitigen Kupplungsstück umfassen. Drückt das Kupplungsstück mit seiner Abflachung auf eine entsprechende Abflachung der Antriebswelle, kann sich letztere nicht mehr drehen. Die genannten Abflachungen sind vorteilhafterweise mantelflächenseitig angeordnet.

Vorteilhafterweise können hierbei die genannten Hemmmittel mit einer elektronischen Abschaltung für den Antriebsmotor zusammenwirken. Insbesondere kann die genannte Steuereinrichtung eine vorzugsweise elektronische Abschaltvorrichtung aufweisen, die den Antriebsmotor bei Hemmung der Antriebswelle abschaltet. Sobald die elektronische Abschaltvorrichtung merkt, dass sich die Antriebswelle der Zahnbürste nicht frei bewegen kann, erfolgt eine Abschaltung des Antriebsmotors, um den Motor und insbesondere auch die Batterien zu schonen. Die Erfassung der Hemmsituation der Antriebswelle kann hierbei in unterschiedlicher Art und Weise erfolgen. Beispielsweise könnte ein Positionssensor vorgesehen sein, beispielsweise ein Schalter, der die Position des vorgenannten Kupplungsstücks erfasst. Befindet sich dieses in seiner Hemmstellung, wird der Antriebsmotor abgeschaltet. Vorteilhafterweise kann die Abschaltung des Motors jedoch auch anhand dessen Leistungsaufnahme erfolgen. Insbesondere kann die vorgenannte Abschaltvorrichtung Erfassungsmittel zur Erfassung des Motorstroms umfassen und den Antriebsmotor dann abschalten, wenn der Motorstrom ein vorbestimmtes Motorstromniveau überschreitet. Dies tritt dann auf, wenn die Antriebswelle blockiert bzw. gehemmt ist.

Durch eine solche mechanische Hemmung der Antriebswelle des Zahnbürstenhandteils bei abgezogenem Aufsatzteil in Verbindung mit einer elektronischen Abschaltung des Antriebsmotors kann eine sehr einfache Reisesicherung mit Batterieschutz erzielt werden. Es braucht lediglich das Aufsatzteil vom Zahnbürstenhandteil abgezogen werden, um ein ungewolltes Anschalten des Zahnbürstenhandteils zu verhindern. Auch wenn dieses lose beispielsweise in einen Koffer gelegt wird, kann sich der Akku der Zahnbürste nicht ungewollt entladen.

Um ein passgenaues Aufsetzen und Ankuppeln des Aufsatzteiles auf den Zahnbürstenhandteilhals auch dann zu gewährleisten, wenn sich auf den Passflächen Schmutz befindet, können an dem Handteilhals des Zahnbürstenhandteiles und/oder an dem Anschlussstück des Aufsatzteiles Schmutzaufnahmesenken vorgesehen sein, in die sich Staubkörner, Brösel oder dergleichen sozusagen verkrümeln können, wenn die beiden Zahnbürstenteile aufeinandergesetzt werden, so dass sie den Ankupplungsvorgang nicht behindern. Die genannten Schmutzaufnahmesenken können hierbei insbesondere an den zylindrischen oder konischen Passflächen von Handteilhals und Aufsatzteil vorgesehen sein, insbesondere an der Außenmantelfläche des Handteilhalses sowie der Innenmantelfläche des Anschlussstücks des Aufsatzteils. Alternativ oder zusätzlich können derartige Schmutzaufnahmesenken auch an dem Hemmungsstück des Zahnbürstenhandteils und/oder des Aufsatzteiles und/oder den daran vorgesehenen Eingriffsteilen vorgesehen werden, so dass der Kupplungsvorgang nicht behindert wird. Beispielsweise kann vorgesehen sein, dass die Außenfläche des aufspreizbaren Hemmungsstücks und/oder die damit in Eingriff bringbare Innenfläche des Aufsatzteils mit derartigen Schmutzaufnahmesenken versehen ist, so dass das Aufspreizen des Hemmungsstücks nicht behindert wird.

Die genannten Schmutzaufnahmesenken können hierbei unterschiedlich, beispielsweise in Form einer Oberflächenriffelung ausgebildet sein, insbesondere in Form einer Längsriffelung mit in Zahnbürstenlängsrichtung verlaufenden, im Wesentlichen nutförmigen Aufnahmesenken.

Diese und weitere Merkmale, die unabhängig von ihrer Zusammenfassung in den Ansprüchen für sich, in Unterkombination oder Kombination miteinander den Gegenstand der Erfindung bilden können, gehen außer aus den Ansprüchen auch aus der nachfolgenden Beschreibung und den zugehörigen Zeichnungen hervor, anhand derer vorteilhafte Ausführungen beschrieben werden. In den Zeichnungen zeigen:

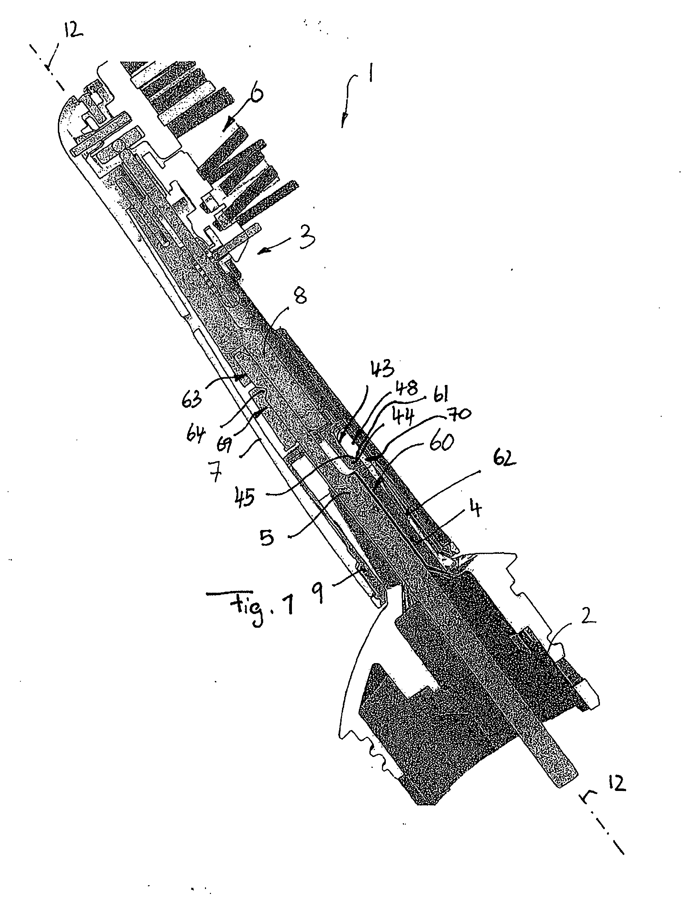

- Fig. 1:: eine ausschnittsweise, schematische Schnittansicht einer elektrischen Zahnbürste mit einem Handteil und einer auf den Handteilhals aufsteckbaren Aufsatzbürste, gemäß der das rohrförmigen Anschlussstück der Aufsatzbürste ein Innenrastelement in Form eines Rasthakens aufweist, der in den Innenraum des Handteilhalses einfährt und dort verrastet,

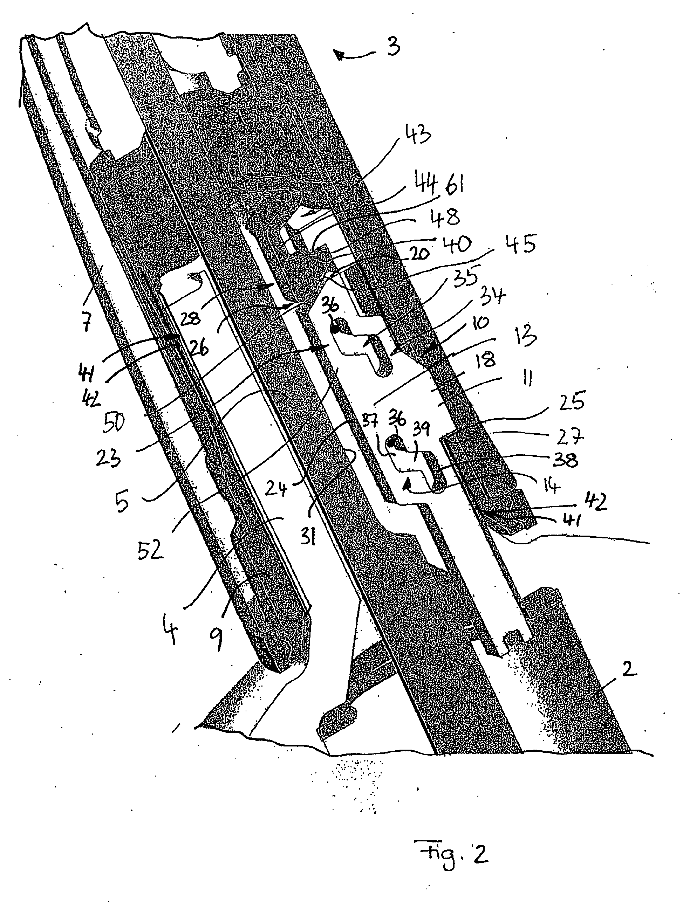

- Fig. 2:: eine ausschnittsweise, schematische Schnittansicht einer weiteren Ausführung einer elektrischen Zahnbürste ähnlich Fig. 1, gemäß der der Rasthaken einen mäanderförmig gekrümmten Federbügel umfasst und im Zahnbürstenhandteil ein spreizbares Kupplungs-/Hemmungsstück zur Verriegelung der Aufsatzbürste und Hemmung der Antriebswelle bei abgezogenem Aufsatzteil vorgesehen ist,

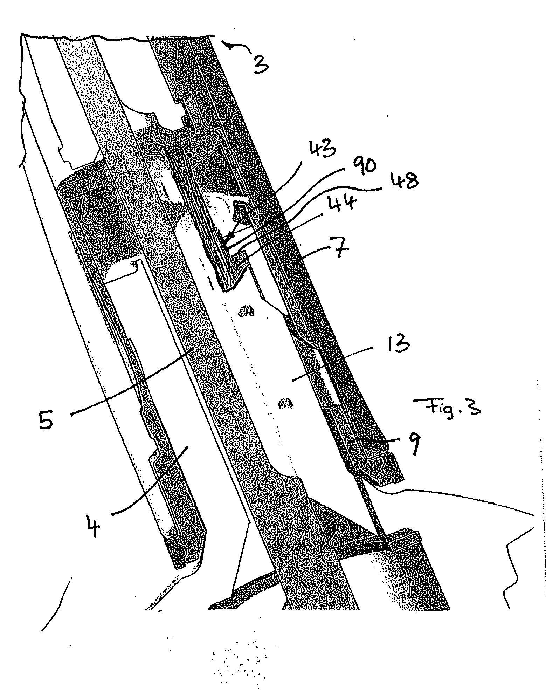

- Fig. 3:: eine ausschnittsweise, schematische Schnittansicht einer weiteren Ausführung einer Zahnbürste ähnlich Fig. 1, gemäß der ein Rasthaken im Inneren des Handteilhalses verrastet und im Handteilhals ein spreizbares Kupplungs/Hemmungsstück vorgesehen ist, über das die Verrastung lösbar ist,

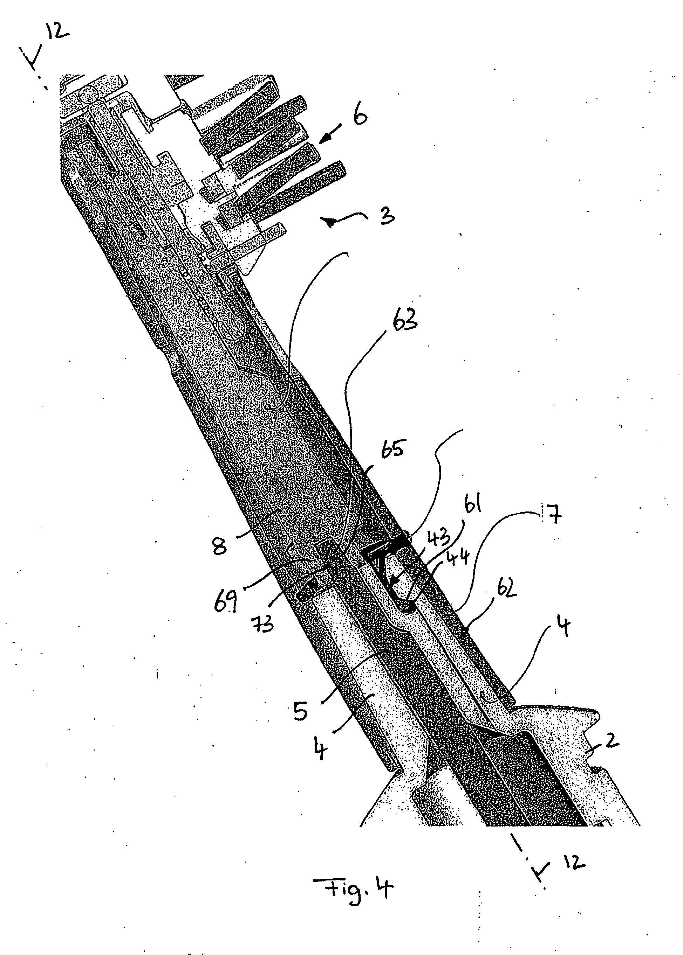

- Fig. 4:: eine ausschnittsweise, schematische Schnittansicht einer weiteren Ausführung einer Zahnbürste ähnlich Fig. 1, gemäß der die Antriebswellen in der Aufsatzbürste und des Handteiles über eine konische Presspassflächenpaarung miteinander verbunden sind und der Handteilhals eine sich konisch verjüngende Außenmantelfläche besitzt,

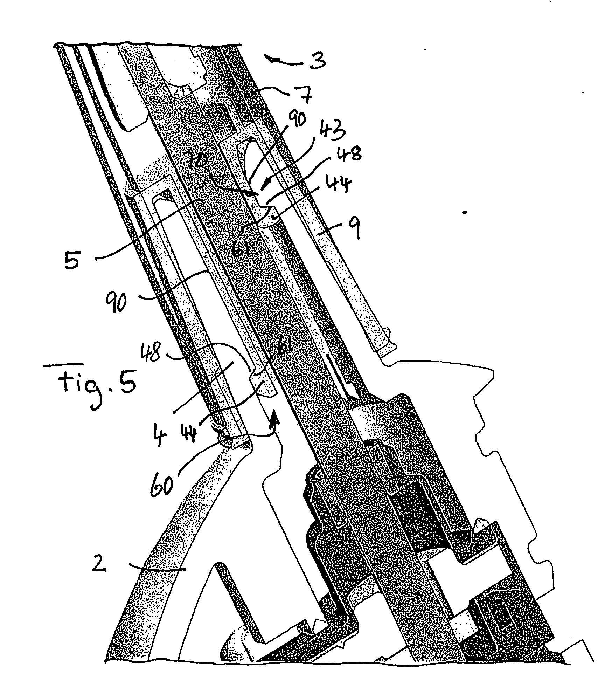

- Fig. 5:: eine ausschnittsweise, schematische Schnittansicht einer weiteren Ausführung einer Zahnbürste ähnlich Fig. 1, gemäß der das Innenrastelement der Aufsatzbürste in Form eines zentralen, rohrförmigen Rasthakens ausgebildet ist, der nach Art einer Hülse über die handteilseitige Antriebswelle schiebbar ist,

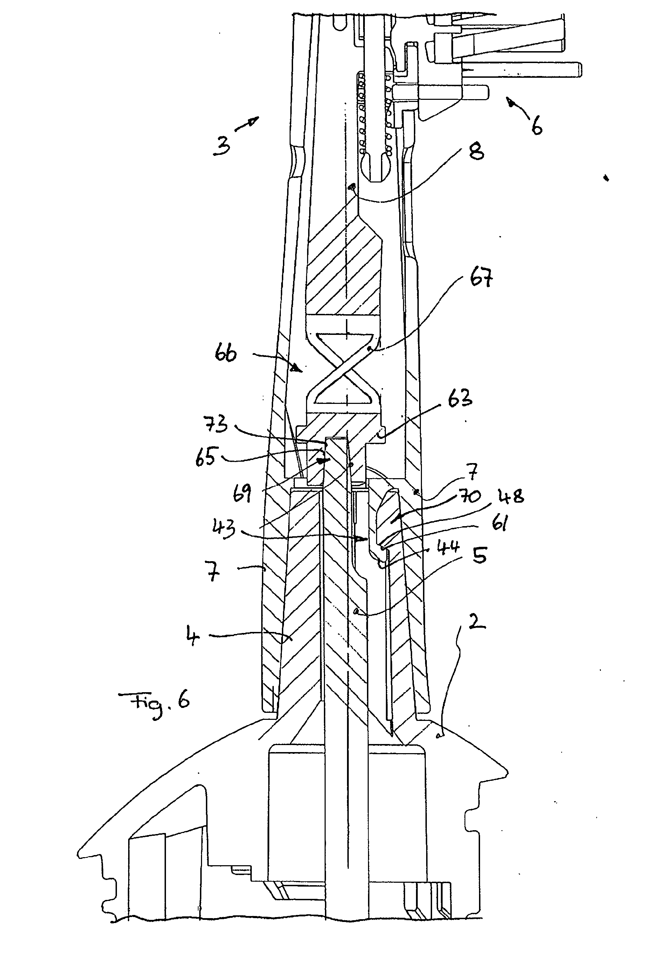

- Fig. 6:: eine ausschnittsweise, schematische Schnittansicht einer weiteren Ausführung einer Zahnbürste ähnlich Fig. 1, gemäß der ein Wellenkupplungsstück der Antriebswelle in der Aufsatzbürste in axialer Richtung beweglich und durch eine Federeinrichtung vorgespannt ist, um einen spielfreien Sitz einer konischen Klemmpassflächenpaarung zwischen den Antriebswellen zu erzielen,

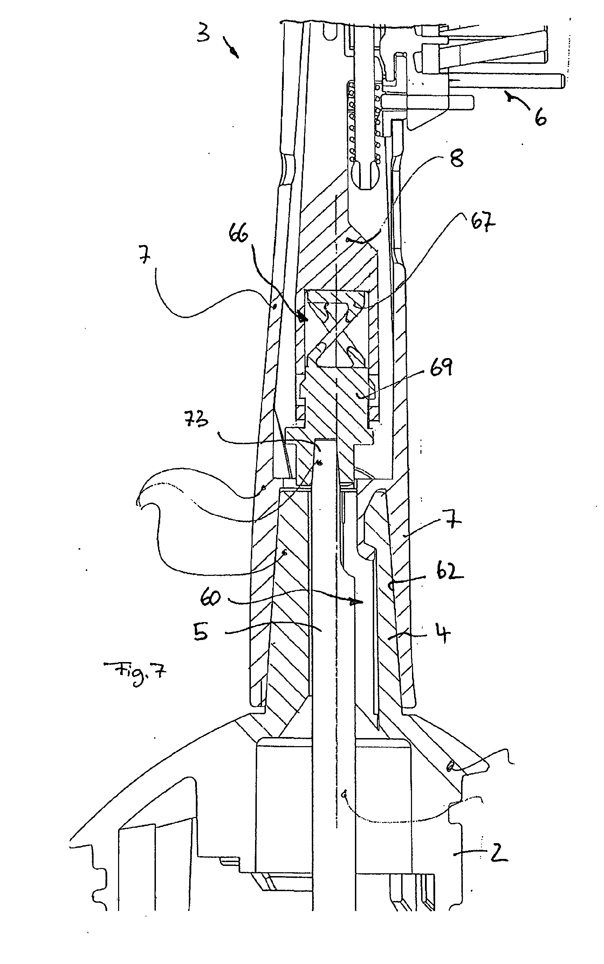

- Fig. 7:: eine ausschnittsweise, schematische Schnittansicht einer Zahnbürste ähnlich Fig. 6, wobei ein separat ausgebildetes Wellenkupplungsstück axial verschieblich an der Antriebswelle der Aufsatzbürste gelagert und über eine Federeinrichtung vorgespannt ist,

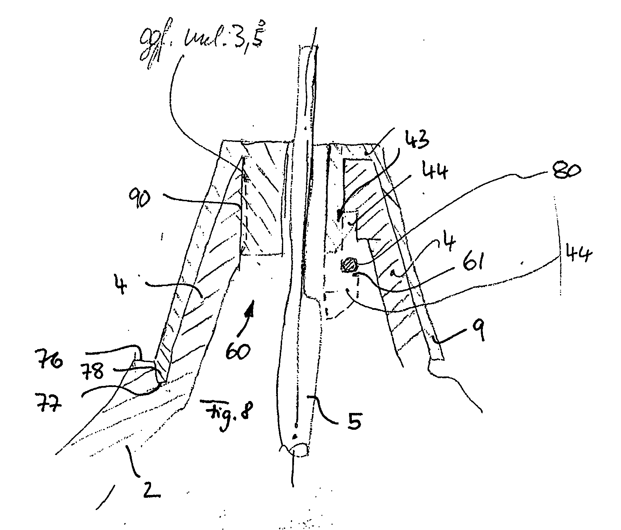

- Fig. 8.: eine ausschnittsweise, schematische Schnittansicht einer weiteren Ausführung einer Zahnbürste ähnlich Fig. 1, gemäß der das Innenrastelement der Aufsatz- bürste an einem konischen Kupplungsring angeformt ist, der den Handteilhals innen und außen umgreift und an konischen Flächen passgenau und spielfrei sitzt,

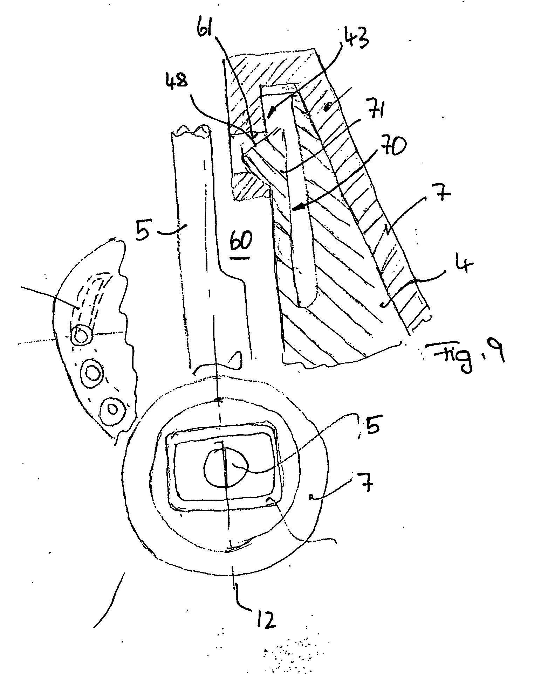

- Fig. 9:: eine ausschnittsweise, schematische Schnittansicht einer weiteren Ausführung einer Zahnbürste im Bereich des Handteilhalses, gemäß der die Innenrastmittel im Innenraum des Handteilhalses eine Rastzunge in Form eines Federbügels aufweisen,

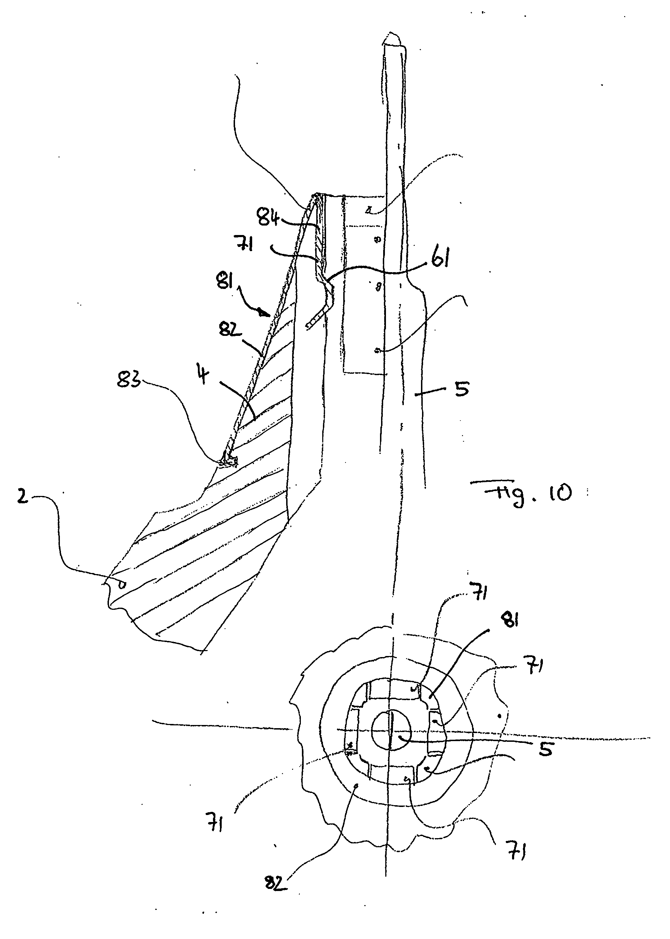

- Fig. 10:: eine ausschnittsweise, schematische Schnittansicht einer weiteren Ausführung einer Zahnbürste im Bereich des Handteilhalses, gemäß der die Innenrastmittel im Innenraum des Handteilhalses mehrere Rastzungen umfassen, die an einem auf dem Handteilhals sitzenden Blecheinsatz angeformt sind,

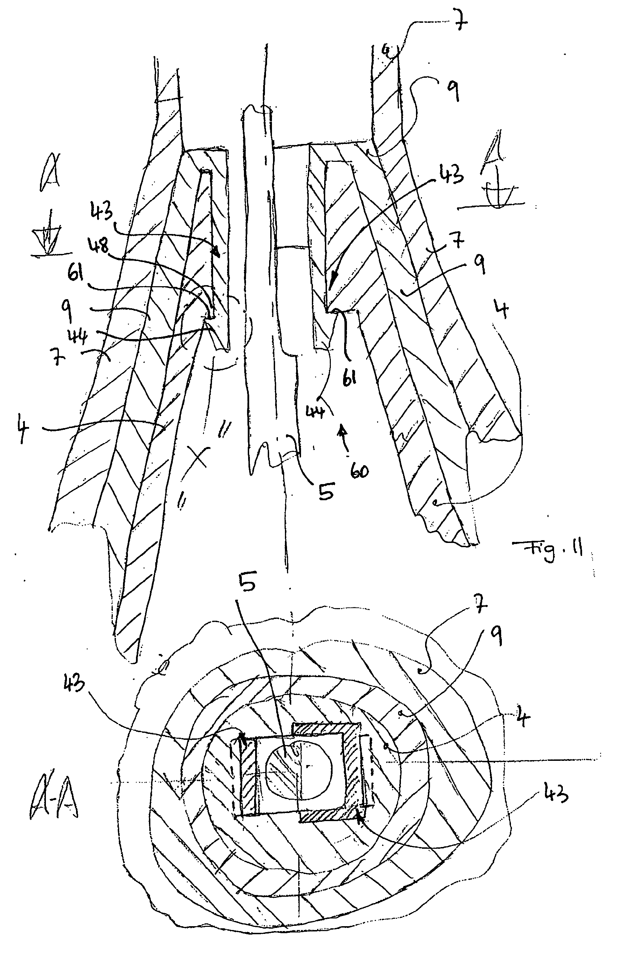

- Fig. 11:: eine ausschnittsweise, schematische Schnittansicht einer weiteren Ausführung einer Zahnbürste ähnlich Fig. 1, gemäß der die Aufsatzbürste zwei Innenrastelemente in Form von federnd ausgebildeten Rastzungen umfasst, die unterschiedlich ausgebildete Rastkonturen aufweisen,

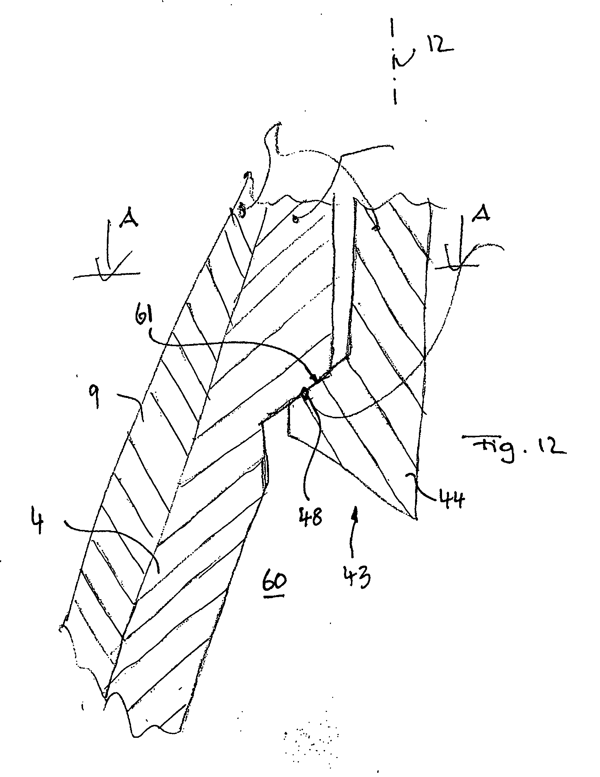

- Fig. 12:: eine vergrößerte, ausschnittsweise Darstellung des in Fig. 11 mit "X" gekennzeichneten Ausschnitts, der die Rastkontur einer der Rastzungen zeigt,

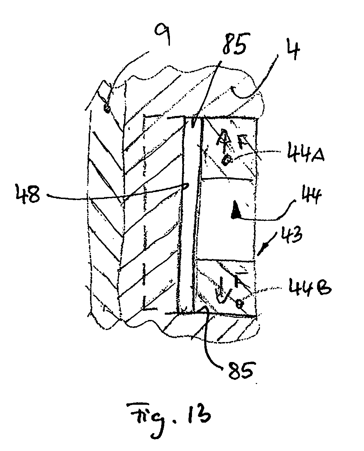

- Fig. 13:: eine Schnittansicht der Rastzunge aus Fig. 12 entlang der in Fig. 12 eingetragenen Linie A-A,

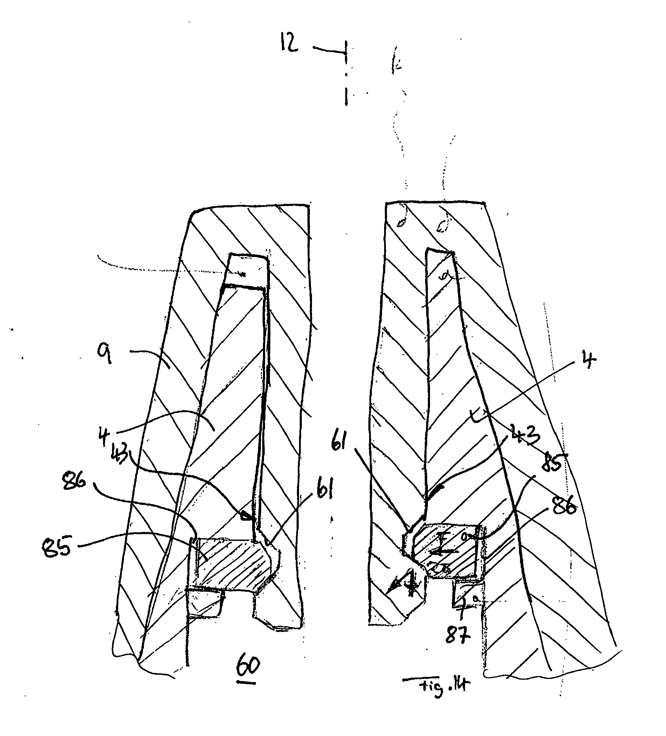

- Fig. 14:: eine ausschnittsweise, schematische Schnittansicht einer weiteren Ausführung einer Zahnbürste ähnlich Fig. 1, gemäß der die Innenrastmittel im Innenraum des Handteilhalses einen radial nach innen gespannten Spannring zur Verrastung mit einem rohrförmig ausgebildeten Innenrastelement an der Aufsatzbürste umfassen,

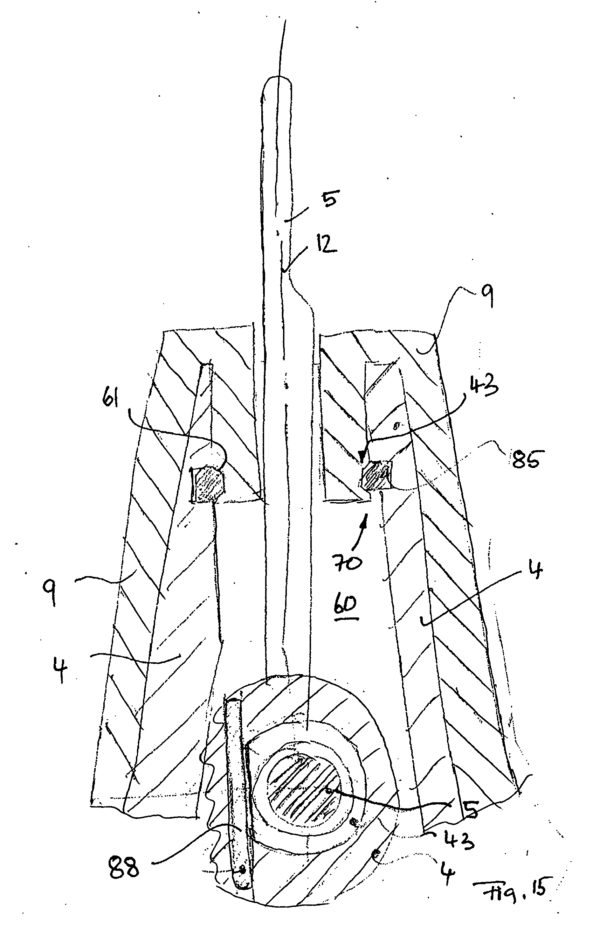

- Fig. 15:: eine ausschnittsweise, schematische Schnittansicht einer weiteren Ausführung einer Zahnbürste ähnlich Fig. 14, gemäß der eine radiale Fixierung der Aufsatzbürste durch ein spangenförmiges Federelement im Bereich der Verrastung vorgesehen ist,

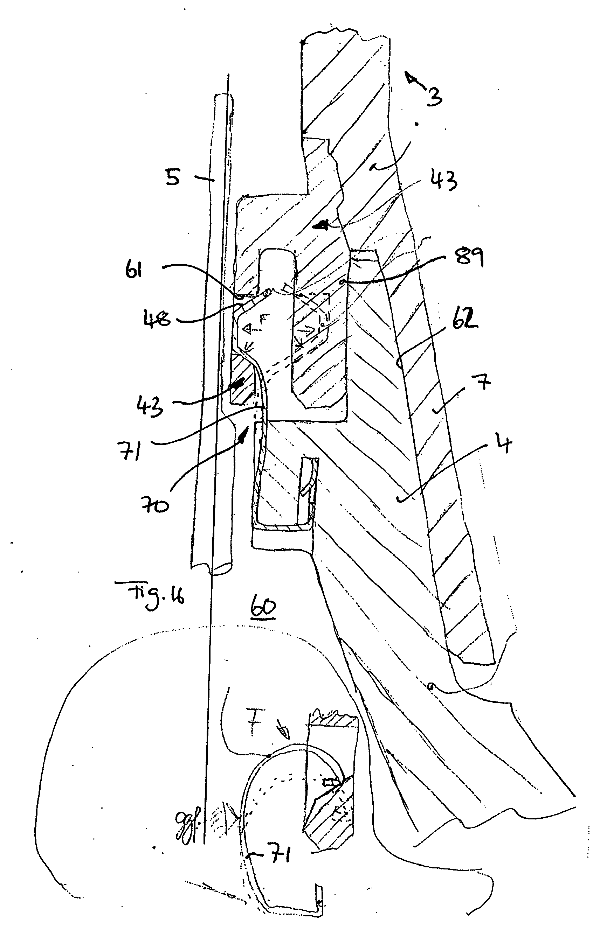

- Fig. 16:: eine ausschnittsweise, schematische Schnittansicht einer weiteren Ausführung einer Zahnbürste ähnlich Fig. 1, gemäß der die im Handteilhals vorgesehen Innenrastmittel eine Rastzunge in Form eines Federbügels und das Innenrastelement der Aufsatzbürste ein ringförmiges Radialpassungselement mit einer Rasttasche umfasst, und

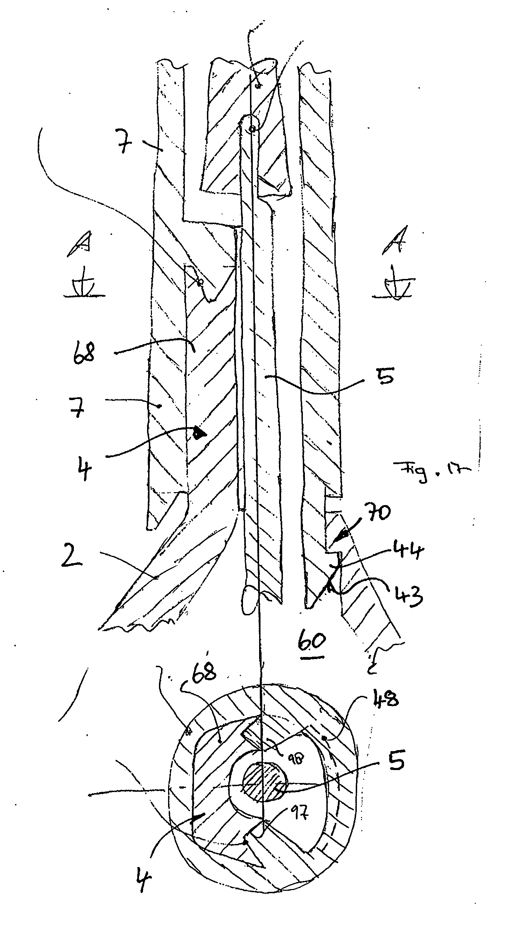

- Fig. 17:: eine ausschnittsweise, schematische Schnittansicht einer weiteren Ausführung einer Zahnbürste ähnlich Fig. 1, gemäß der an dem rohrförmigen Anschlussstück der Aufsatzbürste und dem Handteilhals jeweils halbschalenförmig ausgebildete Kupplungsstücke vorgesehen sind, die passgenau aneinandersetzbar sind.

Die in den Figuren gezeigte Zahnbürste 1 umfasst ein Handteil 2 sowie ein damit verbundenes Aufsatzteil in Form einer Aufsatzbürste 3. Das nur ausschnittsweise dargestellte Handteil 2 umfasst in an sich bekannter Weise ein Gehäuse, in dem ein Antriebsmotor und eine Energieversorgungseinrichtung, beispielsweise ein Akkumulator, aufgenommen sind und an dem ein Betätigungsschalter zum Ein- und Ausschalten des Antriebs vorgesehen ist. An dem in den Figuren 1 bis 3 gezeigten stirnseitigen Ende des Handteiles 2 bildet das Gehäuse des Handteils 2 einen Handteilhals 4, der in der gezeichneten Ausführung - insgesamt betrachtet - in Form eines stirnseitig vorspringenden, stumpfförmigen, im wesentlichen zylindrischen oder kegeligen bzw. konischen Verbindungsstücks ausgebildet ist, das sich ggf. zu seinem freien Ende hin leicht konisch verjüngen kann. Aus dem genannten Handteilhals 4 tritt stirnseitig eine Antriebswelle 5 heraus, die z.B. rotatorisch oszillierend antreibbar ist.

Die Aufsatzbürste 3 umfasst einen Arbeitskopf 6 mit einem nicht näher dargestellten Borstenfeld, das um eine etwa in Borstenlängsrichtung weisende Borstenfeldachse rotatorisch oszillierend antreibbar ist. Der besagte Arbeitskopf 6 wird von einem insgesamt rohrförmigen Anschlussstück 7 getragen, das auf den Handteilhals 4 des Zahnbürstenhandteils 2 aufsteckbar ist. Im Inneren des genannten rohrförmigen Anschlussstücks 7 umfasst die Aufsatzbürste 3 eine Aufsteckwelle 8, die mit der handteilseitigen Antriebswelle 5 drehfest kuppelbar ist.

Zur Befestigung der Aufsatzbürste 3 an dem Handteil 2 ist in dem rohrförmigen Anschlussstück 7 ein Kupplungseinsatz 9 in Form einer Kupplungshülse bzw. eines Kupplungsrings vorgesehen, der in dem rohrförmigen Anschlussstück 7 axial festsitzend angeordnet ist. Der genannte Kupplungseinsatz 9 ist insgesamt - grob gesprochen - zylindrisch bzw. leicht konisch ausgebildet, so dass der Kupplungseinsatz 9 insgesamt passgenau auf den Handteilhals 4 axial aufgeschoben werden kann, wodurch eine spielfreie, passgenaue Befestigung der Aufsatzbürste an dem Handteil 2 erreicht werden kann.

Der genannte Kupplungseinsatz 9 bildet dabei mit seiner Innenmantelfläche ein Außenkupplungsteil 62, das auf die Außenumfangsfläche des Handteilhalses 4 passgenau aufsteckbar ist und diesen umschlingt. Das genannte Außenkupplungsteil 62 bildet insofern ein Umschlingungsteil, das die Aufsatzbürste 3 kippfest am Handteilhals 4 fixiert.

Um ein axiales Herabrutschen von dem vorzugsweise leicht konisch ausgebildeten Handteilhals 4 zu verhindern, ist im Innenraum 60 des Handteilhalses 4 eine Verrastung der Aufsatzbürste 3 mit dem Handteilhals 4 vorgesehen. Hierzu umfasst in der gezeichneten Ausführungsform die Aufsatzbürste 3 ein im Inneren des rohrförmigen Anschlussstücks 7 vorgesehenes Innenrastelement 43, das in der gezeichneten Ausführungsform an dem Kupplungseinsatz 9 angeformt ist, bei einer anderen Ausführung jedoch auch unmittelbar an der Wandung des rohrförmigen Anschlussstück 7 vorgesehen sein kann.

Das genannte Innenrastelement 43 ist dabei in der gezeichneten Ausführungsform als Rastzunge in Form eines Rasthakens 44 ausgebildet, der sich mit seiner Längserstreckung im Wesentlichen parallel zur Längsrichtung 12 der Aufsatzbürste 3 erstreckt und vom Boden des sacklochförmigen Kupplungseinsatzes 9 zur Stirnseite des Anschlussstücks 7 bzw. zum Handteil 2 hin auskragt, vgl. Fig. 1.

An seinem auskragenden Ende umfasst der Rasthaken 44 in der gezeichneten Ausführung eine Rastkontur 61 in Form eines Rastvorsprungs, der von der Außenseite des Rasthakens 44 radial nach außen vorspringt und in Längsrichtung der Aufsatzbürste 3 hinterschnitten ausgebildet ist.

Das genannte Innenrastelement 43 ist hierbei vom Durchmesser her betrachtet gegenüber der Innenmantelfläche des Kupplungseinsatzes 9 radial nach innen versetzt, so dass zwischen der Außenseite des Innenrastelements 43 und der Innenmantelfläche des Kupplungseinsatzes 9 ein Spalt verbleibt, in dem die Wandung des Handteilhalses 4 eingefahren werden kann, vgl. Fig. 1.

Die Rastkontur 61 des Innenrastelements 43 verrastet hierbei mit Innenrastmitteln 70 im Innenraum 60 des Handteilhalses 4, die in der gezeichneten Ausführungsform eine Rastkontur 48 in Form eines Rastvorsprunges umfassen, der von der Innenmantelfläche der Wandung des Handteilhalses 4 radial nach innen vorspringt und in Bezug auf die Längsrichtung 12 hinterschnitten ausgebildet ist. Die genannte Rastkontur 48 ist hierbei an der Wandung des Handteilhalses 4 integral einstückig angeformt.

Wie Fig. 1 zeigt, sind die hinterschnittenen Rastkonturen 48 und 61 der Innenrastmittel 70 bzw. des Rasthakens 44 zur Längsrichtung 12 jeweils spitzwinklig geneigt, so dass durch kräftigen Zug an der Aufsatzbürste 3 die Verrastung lösbar ist. Überdies stellt die geneigte Anstellung der Rastkonturen eine spielfreie Kupplung sicher, da hierdurch eine Axialkraft erzeugt werden kann, wenn der Rasthaken 44 elastisch gegen die komplementäre Rastkontur am Handteilhals 4 drückt. Der besagte Rasthaken 44 ist hierbei vorteilhafterweise als Federbügel ausgebildet, der quer zur Längsrichtung 12, insbesondere in radialer Richtung wegfedern kann.

Hierdurch ergibt sich folgende Funktion: Um die Aufsatzbürste 3 am Handteil 2 anzukuppeln, braucht lediglich die Aufsatzbürste 3 mit ihrem rohrförmigen Anschlussstück 7 auf den Handteilhals 2 axial aufgeschoben zu werden. Hierbei gleitet das Außenkupplungsteil 62 des rohrförmigen Anschlussstücks 7 über die Außenmantelfläche des Handteilhalses 4. Im Inneren des Handteilhalses 4 gleitet unter elastischem Wegbiegen der Rasthaken 44 über die handteilseitige Rastkontur 48 hinweg. Gleichzeitig fädelt das Wellenkupplungsstück 63 der Antriebswelle 8 der Aufsatzbürste 3 auf das Wellenkupplungsstück 69 der Antriebswelle 5 des Handteils 2 auf.

Wird die vollständig aufgeschobene Stellung erreicht, federt der Rasthaken 44 radial zurück, wodurch die Rastkonturen 48 und 61 miteinander in Eingriff gelangen. Gleichzeitig verrastet die Antriebswelle 5 mit der im Aufsatzteil vorgesehenen Antriebswelle 8. Hierzu umfassen die beiden miteinander in Eingriff gelangenden Wellenkupplungsstücke 63 und 69 eine Verrastung, die in der gezeichneten Ausführungsform Rastmittel 64 in Form einer federnd ausgebildeten Rastzunge umfassen, die radial zur Antriebswellenlängsrichtung wegfedern kann und durch radiales Zurückfedern verrastet, vgl. Fig. 1.

Der Handteilhals 4 kann grundsätzlich verschiedene Querschnittsformen besitzen. Ist er zylindrisch oder kegelförmig ausgebildet, kann die Verrastung im Innenraum 60 des Handteilhalses 4 die Aufsatzbürste gegen Verdrehen sichern. Dies kann in einfacher Weise dadurch erfolgen, dass der Rasthaken 44 nicht nur in axialer Richtung verrastet, sondern auch in Umfangsrichtung am Handteilhals 4 geführt ist, vorzugsweise dadurch, dass der Rasthaken 44 in eine nutförmige Tasche oder ähnliche Führungsmittel am Handteilhals 4 einfährt. Alternativ oder zusätzlich kann der Handteilhals 4 und hierzu komplementär der Kupplungseinsatz 9 einen nicht runden Querschnitt besitzen, der den Abtrag von Verdrehkräften bewirkt. Alternativ oder zusätzlich kann in die dem Innenrastelement 63 gegenüberliegende Seite eine zusätzliche Verdrehsicherung z.B. in Form eines Stifts, der axial in den Zahnbürstenhals ragt, eingebracht sein.

Fig. 2 zeigt eine grundsätzlich ähnliche Ausbildung der Zahnbürste 1, die sich von der Ausführung nach Fig. 1 im Wesentlichen durch die Ausbildung des Innenrastelements 43 sowie durch das Vorsehen eines aufspreizbaren Kupplungs-/Hemmstücks 13 im Inneren des Handteilhalses 4 unterscheidet.

Wie Fig. 2 zeigt, ist an dem Handteilhals 4 des Zahnbürstenhandteils 2 ein rippen- und/oder etwa halbschalenförmiges Kupplungs- und Hemmungsstück 13 vorgesehen, das einerseits ein Hemmmittel 23 zur Blockierung der Antriebswelle 5 bildet und gleichzeitig ein Kupplungsstück einer handteilseitigen Kupplungseinrichtung 10 bildet, das mit dem aufsatzbürstenseitigen Kupplungseinsatz 9 in Verriegelungseingriff bringbar ist. Der stumpfförmige Handteilhals 4 ist dabei sozusagen zweigeteilt in einen starr mit dem Handteilgehäuse verbundenes Korpusteil, das den eigentlichen Handteilhals 4 bildet, sowie das beweglich gelagerte Hemmungs- und Kupplungsstück 13, das in der die Antriebswelle 5 hemmenden Ausgangsstellung im Wesentlichen die Kontur des Handteilhalses 4 fortsetzt und zusammen mit diesem den Verbindungsstumpf bildet, auf den das rohrförmige Anschlussstück 7 aufgeschoben werden kann. Insbesondere sitzt das genannte Hemmungs- und Kupplungsstück 13 in der Ausgangsstellung mit einer Abflachung auf einem ebenfalls abgeflachten Segment der Antriebswelle 5, um diese zu hemmen.

Wie Fig. 2 zeigt, kann ein Spreizmechanismus 14 zum Aufspreizen des Hemmungsstücks 13 eine Schiebeführung in Form einer Kulissenführung 34 aufweisen. In der gezeichneten Ausführungsform gemäß Fig. 2 umfasst hierbei das Hemmungs- und Kupplungsstück 13 eine Führungskulisse 35 in Form zweier längsnutförmiger, treppenartig abgewinkelter Führungsnuten, in die zwei Führungsstifte 36 eingreifen, deren Durchmesser in etwa der Breite der Führungsnuten entspricht, um eine im Wesentlichen spielfreie Schiebeführung des Hemmungsstücks 13 zu erzielen. Anstelle der in der Fig. 2 gezeichneten zwei Führungsnuten könnte ggf. auch nur eine Führungsnut vorgesehen sein, ggf. in Verbindung mit einer weiteren Abstützung des Hemmungsstücks 13, so dass dieses beim Aufspreizen zusätzlich eine Schwenkbewegung erfahren würde. Bevorzugt ist jedoch die in der Fig. 2 gezeichnete Kulissenführung mit zwei Führungsstiften 36.

Vorteilhafterweise kann die genannte Führungskulisse 35 verschieden stark zur Handteillängsrichtung 12 geneigte Führungsabschnitte 37, 38 und 39 umfassen, so dass die Hub- bzw. Spreizbewegung des Hemmungsstücks 13 mehrere Phasen durchläuft. Vorzugsweise ist hierbei ein steiler geneigter mittlerer Führungsabschnitt 39 vorgesehen, der in weniger stark geneigte Führungsendabschnitte 37 und 38 mündet, vgl. Fig. 2. Die genannten Führungsendabschnitte 37 und 38 sind dabei vorteilhafterweise im Wesentlichen parallel zur Handteillängsrichtung 12 ausgerichtet, so dass dann, wenn sich die genannten Führungsstifte 36 im Bereich dieser Führungsendabschnitte 37 und 38 befinden, keine Hubbewegung des Hemmungsstücks 13 erfolgt und Letzteres axialkraftfrei auf dem jeweiligen Spreizniveau gehalten wird. Ggf. könnten die genannten Führungsendabschnitte 37 und 38 auch geringfügig gegenläufig - im Vergleich zur Neigung des mittleren Führungsabschnitts 39 - geneigt sein, so dass beim Anfahren der Endstellungen ein leichtes Überdrücken erfolgt.

Die Neigung des mittleren Führungsabschnitts 39 ist hierbei vorteilhafterweise an die Gegebenheiten der Kupplungseinrichtung 10, so insbesondere die Länge der Aufsteckbewegung und den Durchmesser des Handteilhalses sowie die Größe der Abflachung der Antriebswelle 5 angepasst, wobei sich bei der gezeichneten Ausführungsform gemäß Fig. 2 ein Steigungswinkel im Bereich von 45° bis 80° als vorteilhaft erwiesen hat.

Hierdurch ergibt sich folgende Funktion: Wird die Aufsatzbürste 3 auf den Handteilhals 4 aufgeschoben, verbleibt zunächst das Hemmungs- und Kupplungsstück 13 in seiner nach innen gefahrenen, nicht verriegelnden Endstellung. Der Kupplungseinsatz 9 besitzt in seinem Einlaufbereich bis zur Vertiefung 25 hin eine lichte Weite, die radial betrachtet größer ist als das Radialmaß der Rastnase 18 des Hemmungsstücks 13, vgl. Fig. 2.

Hierdurch kann die Aufsatzbürste 3 über das Hemmungs- und Kupplungsstück 13 hinweggeschoben werden, bis dessen Rastnase 18 im Bereich der Vertiefung 25 zu liegen kommt. Beim weiteren Aufschieben der Aufsatzbürste 3 stößt jedoch das Hemmungs- und Kupplungsstück 13 mit einer stirnseitig vorgesehenen Stoßfläche 20, die sich quer zur Handteillängsrichtung 12 erstreckt, gegen die Stoßfläche 26 am Betätigungsvorsprung 28 des Kupplungseinsatzes 9. Hierdurch wird das Hemmungs- und Kupplungsstück 13 beim weiteren Aufstecken der Aufsatzbürste 3 axial mitgenommen, wodurch das Hemmungsstück 13 in der Kulissenführung 34 verfahren wird. Über den geneigten mittleren Führungsabschnitt 39 wird hierbei das Hemmungsstück 13 radial nach außen gedrückt, so dass seine Rastnase 18 in die fensterartige Vertiefung 25 der Aufsatzbürste 3 einfährt, vgl. Fig. 2.

Wie die Fig. 2 zeigt, ist dabei der Betätigungsvorsprung 28 der Aufsatzbürste 3, der das Hemmungs- und Kupplungsstück 13 mitnimmt, in Form eines Federbügels ausgebildet, der in der vollständig aufgeschobenen Stellung am Handteilhals 4 verrastet und insofern eine Rastvorrichtung bzw. das Innenrastelement 43 bildet. Insbesondere kann der Rasthaken 44 beim Einfahren in den Innenraum des Handteilhalses 4 dort zunächst radial wegfedern und über eine Handteilhalskontur hinweggleiten. Bei Erreichen der Endstellung kann der Rasthaken 44 in eine hinterschnittene Ausnehmung einrasten und zurückfedern. In der gezeichneten Ausführung ist hierbei der Rasthaken 44 mit einer radial vorspringenden Rastnase versehen, die in eine am Handteilhals 4 vorgesehene Rastausnehmung einfährt, vgl. Fig. 2. Hierdurch wird ein zusätzliches Zurückhalten der Aufsatzbürste 3 in der aufgeschobenen Stellung erzielt.

Beim Wiederabziehen der Aufsatzbürste 3 wird das Hemmungsstück 13 in umgekehrter Richtung wieder zurück in seine innen liegende Stellung verfahren. Hierbei nimmt eine am Kupplungseinsatz 9 vorgesehene Mitnehmerfläche 27 die am Hemmungs- und Kupplungsstück 13 vorgesehene Mitnehmerfläche 21 und damit das Hemmungsstück 13 in axialer Richtung mit. Gleichzeitig wird der Betätigungsvorsprung 28 über eine Schräge 45 an seiner Rastnase 40 entrastet, vgl. Fig. 2. Beim weiteren Zurückziehen verfährt das Hemmungs-und Kupplungsstück 13 in der Kulissenführung 34 so weit radial nach innen, dass die Innenkontur der Aufsatzbürste 3 über die Rastnase 18 des Hemmungsstücks 13 hinweggezogen werden kann, vgl. Fig. 2. Gleichzeitig sitzt hierbei das Hemmungs- und Kupplungsstück 13 mit seiner innen liegenden Abflachung 24 auf der Abflachung 31 der Antriebswelle 5, die hierdurch blockiert wird.

Vorteilhafterweise sind an den Passflächen von Zahnbürstenhandteil und Aufsatzteil Schmutzaufnahmesenken 41 vorgesehen, in die sich Staubkörner, Schmutzpartikel und dergleichen sozusagen verkrümeln können, so dass sie den Ankuppelvorgang nicht behindern. Insbesondere können als Schmutzaufnahmesenken 42 längsnutartige Riffelungen 42 an der Außenfläche des Hemmungsstücks 13 und/oder der Außenfläche des Handteilhalses 4 vorgesehen sein, vgl. Fig. 2.

Eine grundsätzlich ähnliche Ausführungsform zeigt Fig. 3. Hier ist der Rasthaken 44 jedoch nicht wie bei der Ausführung nach Fig. 2 mäanderförmig gekrümmt, sondern in Form eines im Wesentlichen gerade verlaufenden Arms bzw. einer geraden Rastzunge ausgebildet, die mit ihrer Außenseite 90 in der verrasteten Stellung radial an der Innenfläche der handteilseitigen Rastkontur 48 ansteht, vgl. Fig. 3. Die genannte Rastkontur 48 kann hierbei in Form einer Tasche ausgebildet sein, in die der Rastvorsprung des Rasthakens 44 einfedert, so dass der genannte Rasthaken auch in Umfangsrichtung geführt ist, um Umfangskräfte zu übertragen. Im Übrigen entspricht die Ausführung nach Fig. 3 im Wesentlichen der gemäß Fig. 2, so dass auf deren weitere Beschreibung verwiesen wird.

Eine weitere Ausführung der Zahnbürste 1 zeigt Fig. 4. Bei dieser Ausführung ist das Innenrastelement 44, das wiederum als Rasthaken 44 ähnlich den vorhergehenden Figuren ausgebildet ist, nicht an einem separaten Kupplungseinsatz 9 vorgesehen, sondern unmittelbar an der Wandung des rohrförmigen Anschlussstücks 7 befestigt, insbesondere integral einstückig daran angeformt. Es versteht sich jedoch, dass auch hier eine Ausbildung mit einem Kupplungseinsatz 9 ähnlich den zuvor beschriebenen Figuren möglich wäre.

Wesentliche Unterschiede zu den vorhergehenden Figuren sind indes die Ausbildung des Außenkupplungsteils 62 und der dazu komplementären Kontur des Handteilhalses 4 sowie die Ausbildung der Wellenkupplungsstücke 63 und 69 der Antriebswellen 5 und 8: Die Außenmantelfläche des Handteilhalses 4 ist konisch, insbesondere kegelig ausgebildet, wobei der Schrägungswinkel zur Längsrichtung 12 größer als etwa 7° sein kann, wodurch eine Selbsthemmung an sich ausgeschlossen ist. Dies ermöglicht eine spielfreie Passung auch mit nur kurzen Aufsteckwegen. Die axiale Sicherung der Aufsatzbürste 3 am Handteilhals 4 wird durch die Verrastung im Inneren des Handteilhalses 4 nach der zuvor beschriebenen Art bewerkstelligt.

Ebenso ist die Schnittstelle der Antriebswellen 5 und 8 konisch ausgebildet, wobei an den ineinander steckbaren Wellenkupplungsstücken 63 und 69 zueinander komplementäre Klemmpassflächen 65 und 73 vorgesehen sind, deren Neigungswinkel zur Längsrichtung 12 der Aufsatzbürste 3 ebenfalls größer als etwa 7° sein kann. Hierdurch kann durch axiales Aufeinanderstecken auch mit nur kurzen Stellwegen eine passgenaue und spielfreie Verbindung zwischen den Antriebswellen 5 und 9 erzielt werden. Insbesondere vorteilhaft kann eine derartige konische bzw. kegelige Ausbildung der Wellenkupplungsstücke 63 und 69 in Verbindung mit einer axialen Vorspannung der Antriebswelle 8 und/oder 5 sein, wie dies die Figuren 6 und 7 zeigen.

Die Ausführung gemäß Fig. 6 ist dabei hinsichtlich der Verrastung des rohrförmigen Anschlussstücks 7 an dem Handteilhals 4 ähnlich den vorhergehenden Ausführungen ausgebildet, so dass auf deren Beschreibung verwiesen wird. Insbesondere ist, wie Fig. 6 zeigt, an dem Anschlussstück 7 ein Innenrastelement 43 in Form des Rasthakens 44 vorgesehen, vgl. Fig. 6. Wesentliches Merkmal der Ausführung nach Fig. 6 gegenüber der zuvor beschriebenen Ausführung ist die Vorspannvorrichtung 66, mittels derer das Wellenkupplungsstück 63 der aufsatzbürstenseitigen Antriebswelle 8 auf das Wellenkupplungsstück 69 der handteilseitigen Antriebswelle 5 gespannt wird. Die beiden Wellenkupplungsstücke 63 und 69 umfassen hierbei ähnlich der zuvor beschriebenen Ausführung zur Längsrichtung spitzwinklig geneigte Klemmpassflächen 65 und 73, die ebenfalls unter einem Keilwinkel von mehr als etwa 7° angestellt sein können. Wie Fig. 6 zeigt, ist das aufsatzbürstenseitige Wellenkupplungsstück 63 an der zugehörigen Antriebswelle 8 mittels einer Federeinrichtung 67 in Form einer angespritzten Druckfeder angeformt, die mehrere diagonal verlaufende Federbügel aufweist, vgl. Fig. 6. Hierdurch ist das Wellenkupplungsstück 63 axial verschieblich entgegen der Kraft der Federeinrichtung 67. Wird die Aufsatzbürste 3 auf das Handteil 2 aufgeschoben, wird die Federeinrichtung 67 sozusagen gestaucht, wodurch eine Vorspannung des Wellenkupplungsstücks 63 gegen das Wellenkupplungsstück 69 erzielt wird. Hierdurch werden die Wellenkupplungsstücke fest aufeinander gehalten. Die Axialkraft der Federeinrichtung 67 wird hierbei vorteilhafterweise durch die Verrastung im Inneren des Handteilhalses 4 kompensiert.

Fig. 7 zeigt eine grundsätzlich ähnliche Ausbildung wie Fig. 6, wobei hier jedoch keine angespritzte Druckfeder verwendet wird. Vielmehr ist das Wellenkupplungsstück 63 von der Antriebswelle 8 separat ausgebildet und an dieser mittels einer Längsführung 75 drehfest, jedoch axial verschieblich geführt. Die genannte Längsführung 75 kann grundsätzlich verschieden ausgebildet sein, beispielsweise nach Art einer Keilwellenverbindung, die axial gegen Herausrutschen gesichert ist.

Die Vorspannvorrichtung 66 umfasst auch hier eine Federeinrichtung 67, die vorteilhafterweise als Druckfeder ausgebildet ist und in einer Sacklochbohrung zwischen dem Wellenkupplungsstück 63 und der Antriebswelle 8 aufgenommen sein kann, um das Wellenkupplungsstück 63 axial gegenüber der Antriebswelle 8 vorzuspannen. Hierdurch kann eine im Wesentlichen ähnliche Funktion wie bei Fig. 6 erzielt werden.

Obwohl in den Figuren nicht eigens gezeigt, könnte sozusagen in kinematischer Umkehrung oder auch zusätzlich auch eine Verschiebbarkeit und axiale Vorspannung der handteilseitigen Antriebswelle 5 und/oder deren Wellenkupplungsstücks 69 vorgesehen sein

Bezüglich der Innenverrastung im Innenraum 60 des Handteilhalses 4 können weitere vorteilhafte Ausführungsformen vorgesehen sein. So zeigt z.B. Fig. 5 ein Innenrastelement 43 in dem rohrförmigen Anschlussstück 7 der Aufsatzbürste 3, das in Form einer Hülse bzw. eines rohrförmigen, zentralen Rasthakens 44 ausgebildet ist, der wie eine Schiebehülse über die Antriebswelle 5 des Handteils 2 schiebbar ist. Dieser rohrförmige Rasthaken 44 bzw. die hülsenförmige Ausbildung kann hierbei geschlitzt sein, so dass mehrere Rastzungen vorgesehen sind, die jeweils quer zur Längsrichtung 12 des Aufsatzteils 3, insbesondere in radialer Richtung wegfedern und verrasten können. Hierzu komplementär umfasst die Innenwandung des Handteilhalses 4 mehrere entsprechende Rastkonturen 48.

Wie Fig. 5 zeigt, können hierbei die Rastkonturen 61 an dem Innenrastelement 43 an verschiedenen axialen Stellen vorgesehen sein, d.h. die Rasthaken 44 können unterschiedlich lang sein. In der in Fig. 5 gezeichneten Ausführungsform ist der rohrförmige, zentrale Rasthaken 44 an dem zuvor beschriebenen Kupplungseinsatz 9 vorgesehen.

Die genannte Rasthülse kann dabei vorteilhafterweise gleichzeitig radiale Positionierflächen 90 besitzen und sozusagen eine vorzugsweise leicht konische Zentrierhülse bilden, die im Innenraum 60 des Handteilhalses 4 eine Zentrierung des Anschlussstücks 7 bewirkt.

Eine weitere vorteilhafte Ausführung des Innenrastelements 43 zeigt Fig. 8. Das Innenrastelement 43 ist hierbei an einem in das rohrförmige Anschlussstück 7 der Aufsatzbürste 3 einsetzbaren Profilring angeformt, der den Kupplungseinsatz 9 bilden kann, der zuvor beschrieben wurde. Dieser als Kupplungseinsatz 9 dienende Profilring umfasst einerseits eine konische Außenhülse, die sich zur Stirnseite des Anschlussstücks 7 hin erweitert und passgenau auf einem sich konisch verjüngenden Außenmantel des Handteilhalses 4 sitzt. Der genannte Handteilhals 4 umfasst hierbei vorteilhafterweise an seinem zum Griffteil hin liegenden Ende eine stufenförmige Erweiterung 76, in die eine Tasche 77, insbesondere eine ringnutförmige Tasche, eingearbeitet sein kann, in die der genannte Außenhülsenabschnitt 78 des Kupplungseinsatzes 9 passgenau einfährt, vgl. Fig. 8.

Zum anderen umfasst der Kupplungseinsatz 9 einen Innenhülsenabschnitt 79, an dem ein Rasthaken ähnlich den zuvor beschriebenen Ausführungen vorgesehen ist. Von dem genannten Innenrasthaken 44 abgesehen, der beispielsweise durch Längsschlitze vom Rest des Innenhülsenabschnitts 79 abgetrennt sein kann, kann der genannte Innenhülsenabschnitt 79 eine konische Außenmantelfläche umfassen, die passgenau an einer Innenmantelfläche des Handteilhalses 4 sitzt, vgl. Fig. 9, so dass das rohrförmige Anschlussstück 7 sozusagen mit einer Doppelpassung auf dem Handteilhals 4 gehalten wird.

Die Verrastung durch den Rasthaken 44 kann hierbei in der zuvor beschriebenen Weise erfolgen. Alternativ kann anstelle eines an die Wandung des Handteilhalses 4 angeformten Rastvorsprungs auch ein quer verlaufender Stift 80 in den Innenraum 60 des Handteilhalses 4 eingesetzt sein, über den die Rastkontur 61 des Rasthakens 44 fährt und verrastet.

Wie Fig. 9 zeigt, kann die Verrastung im Innenraum 60 des Handteilhalses 4 sozusagen auch umgedreht werden. Insbesondere können auch die Innenrastmittel 70, die handteilseitig vorgesehen sind, eine Rastzunge in Form eines Federbügels umfassen, der sich im Wesentlichen parallel zur Längsrichtung 12 des Handteilhalses 4 erstreckt und quer hierzu elastisch verformbar ausgebildet ist. Insbesondere kann die Rastzunge in Form des Federbügels 71, wie Fig. 9 zeigt, in Radialrichtung wegfedern und verrasten, wozu am auskragenden Ende der Rastzunge bzw. des Federbügels 71 eine geeignete Rastkontur 48 beispielsweise in Form eines radial nach innen vorspringenden Rastvorsprungs angebracht sein kann.

Das Innenrastelement 43 der Aufsatzbürste 3 ist hierbei in Form eines an sich starren Vorsprungs ausgebildet, der stirnseitig auskragt und hierdurch in den Innenraum 60 des Handteilhalses 4 einfahren kann. Der das Innenrastelement 43 bildende Vorsprung umfasst hierbei eine Rastkontur 61 in Form einer Rastsenke, in die der Rastvorsprung am Federbügel 71 einfahren kann, vgl. Fig. 9.

Wie Fig. 10 zeigt, können im Innenraum 60 des Handteilhalses 4 auch mehrere Federbügel 71 vorgesehen sein, die in der gezeichneten Ausführungsform an einem hülsenförmigen Einsatz angeformt bzw. befestigt sind, der am Handteilhals 4 sitzt. Der genannte Handteilhalseinsatz 81 ist dabei mit einem Außenabschnitt 82 über die Außenmantelfläche des Handteilhalses 4 gestülpt und daran mittels Rastkrallen 83 fest verrastet. An dem genannten Außenabschnitt 82 des Einsatzes 81 ist ein in den Innenraum 60 des Handteilhalses 4 sich hinein erstreckender Innenabschnitt 84 angeformt, der - grob gesprochen - einen hülsenförmigen, vorzugsweise im Querschnitt unrunden Einsatz bildet, an dem die genannten Rastzungen bzw. Federbügel 71 vorgesehen sind, die quer zur Längsrichtung des Handteilhalses 4, insbesondere in radialer Richtung wegfedern können und entsprechende bezüglich der Längsrichtung hinterschnittene Rastkonturen 61 vorzugsweise in Form von Rastvorsprüngen besitzen. Der genannte Einsatz 81 kann beispielsweise als Blechteil geformt sein, so dass die Federbügel 71 mit den Rastkonturen 48 Blechbügel bilden. In den Innenraum 60 des Handteilhalses 4 kann das rohrförmige Anschlussstück 7 der Aufsatzbürste 3 mit seinen Innenrastelementen 43 einfahren, ähnlich wie dies Fig. 9 zeigt, um mit den genannten Federbügeln 71 zu verrasten.

Um eine radiale Fixierung und gleichzeitig eine axiale Spielfreiheit zu erzielen, können im Innenraum des Handteilhalses 4 auch unterschiedlich ausgebildete Innenrastelemente 43 bzw. unterschiedlich ausgebildete Innenrastmittel 70 Verwendung finden. Wie Fig. 11 zeigt, kann beispielsweise einerseits ein Rasthaken 44 mit einer zur Längsrichtung 12 im Wesentlichen rechtwinklig ausgerichteten Rastkontur 61 vorgesehen sein, die mit einer ebenfalls rechtwinklig zur Längsrichtung 12 ausgerichteten Rastkontur 48 am Handteilhals 4 verrastet. Andererseits kann ein Rasthaken 44 vorgesehen sein, der als Rastkontur 61 einen zur Längsrichtung 12 nicht rechtwinklig, sondern spitzwinklig geneigte Rastfläche besitzt, die mit einer dazu komplementär spitzwinklig geneigten Rastfläche 48 am Handteilhals 4 verrastet, wie dies Fig. 12 zeigt. Durch ein solches schräg gestelltes Rastkonturenpaar 48 und 61 kann eine Axialkraftkomponente durch die Verrastung erzielt werden, die das Anschlussstück 7 der Aufsatzbürste 3 spielfrei auf dem Handteilhals 4 hält.

Alternativ oder zusätzlich zu einem unrunden Querschnitt von Handteilhals 4 und Anschlussstück 7 kann auch eine radiale Bewegung und/oder eine Bewegung in Umfangsrichtung zwischen Aufsatzbürste 3 und Handteilhals 4 durch eine geeignete Ausbildung der Verrastung im Innenraum 60 des Handteilhalses 4 eliminiert werden. Wie Fig. 13 zeigt, kann hierzu eine der Rastkonturen, beispielsweise die Rastkontur 48 der Innenrastmittel 70 des Handteilhalses 4 in Form einer Tasche ausgebildet sein, die in Umfangsrichtung hinterschnitten ist, d.h. in Umfangsrichtung betrachtet Anfangs- und Endwände 85 aufweist. In eine solchermaßen ausgebildete Rastsenke kann der Rasthaken 44 passgenau einfahren, wobei der Rasthaken 44 in diesem Fall vorteilhafterweise zwei voneinander weg aufspreizbare Rasthakenteile 44A und 44B besitzen kann, die sich mit Positionierflächen 91 gegen die genannten Begrenzungsflächen in Umfangsrichtung anlegen, vgl. Fig. 13. Die genannten Rasthakenteile können hierbei beispielsweise ausfahrbare Klemmstücke sein, die durch eine Feder voneinander weg vorgespannt sind. Alternativ kann auch eine mit einem Längsschlitz geteilte Rastzunge vorgesehen sein, so dass zwei auskragende Rastzungenenden vorhanden sind, die passgenau in die taschenförmige Rastsenke der Rastkontur 61 an der Handteilhalsinnenraumwandung einfahren, wie dies Fig. 13 zeigt.

Gemäß Fig. 14 kann die Verrastung im Innenraum 60 des Handteilhalses 4 auch mittels eines Spannrings 85 erfolgen, der in der gezeichneten Ausführungsform in einer ringnutförmigen Aufnahmetasche 86 in der Innenumfangsfläche des Handteilhalses 4 sitzt und im entspannten Zustand über die genannte Innenmantelfläche nach innen vorsteht. Der genannte Spannring 85 ist dabei in der genannte Aufnahmetasche 86 derart aufgenommen, dass er sich radial aufweiten kann, so dass sein Überstand nach innen über die Innenmantelfläche zumindest verkleinert oder beseitigt werden kann, wenn der Spannring auffedert.

Das an der Aufsatzbürste 3 vorgesehene Innenrastelement 43 ist hierbei vorteilhafterweise in Form einer vorspringenden Rasthülse ausgebildet, die über die Antriebswelle 5 schiebbar ist und an ihrem Außenumfang eine Rastkontur 61 in Form einer Umfangsnut aufweist, die bei vollständigem Aufschieben - grob gesprochen - zur Deckung mit der Aufnahmetasche 86 kommt, so dass der Spannring 85 in die genannte Umfangsnut der Rastkontur 61 einfedern kann. Vorteilhafterweise sind hierbei die Rastflächen des Spannrings 85 und/oder der Umfangsnut an dem Innenrastelement 43 zur Längsrichtung 12 spitzwinklig geneigt bzw. nach Art von Keilflächen ausgebildet, um eine axial spielfreie Verbindung zu erzielen. Die genannte Rasthülse kann konische Außenflächen besitzen und/oder eine radiale Zentrierhülse bilden, um das Anschlussstück 7 auch radial abzustützen.

Wie Fig. 14 zeigt, kann die Aufnahmetasche 86 am einen Ende durch einen Fixierring 87 begrenzt sein, der den Spannring 85 axial fixiert. Alternativ zu der in Fig. 14 gezeigten Ausführung könnte die Anordnung auch umgedreht werden, insbesondere dergestalt, dass der Spannring 85 in einer Aufnahmetasche 86 in dem rohrförmigen Innenrastelement 43 sitzt und einfedern kann, sowie durch Ausfedern in eine Umfangsnut in der Innenmantelfläche des Handteilhalses 4 einfedern bzw. einrasten kann.

Fig. 15 zeigt eine an sich ähnliche Ausbildung der Verrastung im Innenraum 6 mittels eines Spannrings 85. Um auch eine Sicherung gegen Verdrehen in der Verrastung zu realisieren, kann ein sich quer erstreckendes, von der Kreisringform abweichendes und vorteilhafterweise tangential angeordnetes Federelement 88 vorgesehen sein, das in eine dazu passend ausgebildete Rastnut einfedern kann.

Eine weitere Ausführungsform zeigt Fig. 16, gemäß der in dem Innenraum 60 des Handteilhalses 4 ein Federbügel 71 vorgesehen ist, der an dem Handteilhals 4 befestigt ist und sich im Wesentlichen in axialer Richtung als Rastzunge erstreckt, die einen am auskragenden Ende vorgesehenen Rastvorsprung besitzt, der durch eine U-förmige Abwinklung des Federbügels gebildet ist, vgl. Fig. 16.

Das rohrförmige Anschlussstück 7 der Aufsatzbürste 3 umfasst auch hier ein zur Stirnseite hin vorspringendes Innenrastelement 43, das in den Handteilhals 4 einfährt. Das genannte Rastelement 43 kann hierbei vorteilhafterweise einen Profilring bilden, der mit einem Außenmantelflächenabschnitt 89 passgenau in einen Innenmantelflächenabschnitt des Handteilhalses 4 einfährt. Insbesondere in Verbindung mit einer konischen Ausbildung der Außenmantelfläche des Handteilhalses 4 und einem dazu komplementär ausgebildeten Außenkupplungsteil 62 kann hierdurch eine spielfreie Radialpassung erzielt werden.

Um auch axial eine spielfreie Fixierung zu erreichen, können die Rastkonturen 48 des Federbügels 71 der Innenrastmittel 70 und die Rastkontur 61 des Innenrastelements 43 in geeigneter Weise aufeinander abgestimmt sein. Insbesondere kann der durch die U-förmige Abwinklung des Federbügels 71 gebildete Rastvorsprung der Innenrastmittel 70 in eine Rastsenke an dem Innenrastelement 43 einfahren, die für die genannte U-förmige Abwinklung an sich zu klein ist. Schnappt der Federbügel 71 in die genannte Rastsenke am Innenrastelement 43 ein, wird der Federbügel beidseitig gegen die Ränder der Rastsenke gepresst, wodurch eine spielfreie axiale Fixierung erzielt wird, vgl. Fig. 16.

Es versteht sich, dass die genannte Ausbildung ggf. auch umgedreht werden könnte, d.h. an dem Innenrastelement 43 ein entsprechender Vorsprung vorgesehen ist, auf dem der U-förmig abgewinkelte Teil des Federbügels 71 aufschnappt. Durch zwei kegelig und/oder schräg angestellte Schrägflächen bzw. Keilflächen an dem Federbügel 71 sowie dazu komplementäre Kegel- und/oder Schrägflächen an dem Innenrastelement 43 und deren elastisches Aufeinanderpressen kann eine spielfreie axiale Fixierung der Aufsatzbürste 3 erzielt werden.

Eine weitere Ausführung zeigt Fig. 17, gemäß der der Handteilhals 4 und das rohrförmige Anschlussstück 7 keine geschlossenen Ringprofile bilden, sondern jeweils halbschalenförmig ausgebildete Kupplungsstücke 68, die einander ergänzend aufeinandergesetzt werden können, so dass eine verdrehsichere Befestigung der Aufsatzbürste 3 erzielt wird. Genauer gesagt kann hierbei der Handteilhals 4 ein halbschalenförmiges Kupplungsstück 68 bilden, das in das rohrförmige Anschlussstück 7 der Aufsatzbürste 3 einfährt. In dem besagten Anschlussstück 7 sind nach innen vorspringende Kupplungsflansche 98 vorgesehen, die auf die Ränder des halbschalenförmigen Kupplungsstücks 68 fahren. Vorteilhafterweise sind hierbei die randseitigen Endflächen des halbschalenförmigen Kupplungsstücks und/oder die damit in Eingriff geratenden Eingriffsvorsprünge des Anschlussstücks 7 mit einer Zentrierkontur 97 beispielsweise in Form einer V-förmigen Kehlung oder eines Schwalbenschwanzprofils versehen, um eine Zentrierung des Handteilhalses 4 in dem Anschlussstück 7 zu erzielen. Das genannte halbschalenförmige Kupplungsstück 68 wird hierbei also einerseits umfangsseitig von dem Anschlussstück 7 umschlungen und zum anderen an den randseitigen Enden zentrierend abgestützt.

Alternativ oder zusätzlich kann auch eine Zentrierung an der Stirnseite des Handteilhalses 4 erfolgen. Vorteilhafterweise kann hierbei an dem Anschlussstück 7 und der Stirnseite des halbschalenförmigen Kupplungsstücks 68 eine halbringförmige Zentrierkontur beispielsweise in Form einer V-förmigen Kehlung und/oder eines Schwalbenschwanzprofils vorgesehen sein, vgl. Fig. 17.

In Umkehrung der in Fig. 17 gezeigten Anordnung könnte auch das Anschlussstück 7 das halbschalenförmige Kupplungsstück 68 aufweisen, das dann in komplementärer Weise an dem Handteilhals 4 aufgeschoben wird.

Wie Fig. 17 zeigt, ist auch hier eine im Innenraum 60 des Handteilhalses 4 angeordnete Verrastung mittels eines Rasthakens 44 vorgesehen.

## Patentansprüche

1. Aufsatzteil, insbesondere -bürste, für eine elektrische Zahnbürste (1), mit einem Arbeitskopf (6), einem mit dem Arbeitskopf (6) verbundenen, rohrförmigen Anschlussstück (7) zum Anschließen an einen Handteilhals (4) eines Zahnbürstenhandteils (2), sowie einem Antriebselement, beispielsweise einer Antriebswelle (8) zum Antreiben des Arbeitskopfs (6), **dadurch gekennzeichnet, dass** das Anschlussstück (7) ein Element (43) zum Einfahren in den Innenraum (60) des Handteilhalses (4) aufweist, das eine lösbare form- und/oder kraftschlüssige Verbindung des Aufsatzteils mit dem Handteilhals (4) herstellt.

2. Aufsatzteil nach dem vorhergehenden Anspruch, wobei das Element (43) ein Innenklemmelement ist, das sich in Richtung zur Anschlußstückstirnseite erstreckt, und an eine Innenklemmkontur (48) des Handteilhalses (4) angepaßte Abmessungen aufweist

3. Aufsatzteil nach einem der vorhergehenden Ansprüche, wobei das Element (43) ein Innenrastelement ist, das eine sich in Richtung zur Anschlußstückstirnseite erstreckende Rastzunge, beispielsweise einen Rasthaken (44), aufweist, die eine an die Innenrastkontur (48) des Handteilhalses (4) formangepasste Rastkontur (61), beispielsweise Rastsenke oder Rastvorsprung, aufweist.

4. Aufsatzteil nach dem vorhergehenden Anspruch, wobei die Rastkontur (61) auf der radial nach außen gewandten Seite des Elements (43) angeordnet ist.

5. Aufsatzteil nach einem der vorhergehenden Ansprüche, wobei das rohrförmige Anschlußstück (7) ein Außenkupplungsteil (62) zum Aufsetzen auf eine Außenseite des Handteilhalses (4) aufweist.

6. Aufsatzteil nach dem vorhergehenden Anspruch, wobei das Außenkupplungsteil (62) ein Umschlingungsstück zur Umschlingung des Handteilhalses (4) bildet.

7. Aufsatzteil nach einem der beiden vorhergehenden Ansprüche, wobei das Außenkupplungsteil (62) ein Innenmantelflächenstück umfasst, gegenüber dem das Element (43) radial nach innen zurückgesetzt ist und/oder durch einen Spalt beabstandet ist.

8. Aufsatzteil nach einem der drei vorhergehenden Ansprüche, wobei das Außenkupplungsteil (62) eine sich konisch erweiternde Steckhülse bildet.

9. Aufsatzteil nach Anspruch 3 oder einem auf diesen rückbezogenen Anspruch, wobei die Rastzunge einen Federbügel bildet, der sich etwa in Längsrichtung (12) des rohrförmigen Anschlussstücks (7) erstreckt und quer zur genannten Längsrichtung (12) elastisch verformbar ausgebildet ist.

10. Aufsatzteil nach einem der vorhergehenden Ansprüche, wobei das Innenrastelement (43) bezüglich der Längsrichtung (12) des rohrförmigen Anschlussstücks (7) hinterschnitten ausgebildet ist und/oder derart ausgebildet ist, dass die Verrastung durch eine axiale Relativbewegung zum Handteilhals (4) etwa parallel zur genannten Längsrichtung (12) des rohrförmigen Anschlussstücks (7) verriegelbar und/oder lösbar ist.

11. Aufsatzteil nach einem der vorhergehenden Ansprüche, wobei das Innenrastelement (43) eine zur Längsrichtung (12) des rohrförmigen Anschlussstücks (7) spitzwinklig geneigte Ausrastschräge (45) vorzugsweise in Form einer Keilfläche zum Lösen der Verrastung aufweist.

12. Aufsatzteil nach einem der vorhergehenden Ansprüche, wobei das Innenrastelement (43) eine zentrale, rohrförmige, vorzugsweise geschlitzte Rasthülse bildet und/oder Teil einer zentralen Zentrierhülse ist, die über die Antriebswelle (5) des Handteils schiebbar ist.

13. Aufsatzteil nach einem der vorhergehenden Ansprüche, wobei das rohrförmige Anschlußstück (7), vorzugsweise das Innenrastelement (43), Innenzentrierflächen zur radialen Zentrierung des Anschlußstücks (7) im Innenraum (60) des Handteils (2) aufweist.

14. Aufsatzteil nach einem der vorhergehenden Ansprüche, wobei das Innenrastelement (43) radiale Positionierflächen (90) zur radialen Positionierung des Aufsatzteils an dem Handteilhals (4) aufweist.

15. Aufsatzteil nach einem der vorhergehenden Ansprüche, wobei das Innenrastelement (43) in Umfangsrichtung hinterschnitten ausgebildet ist und/oder Verdrehsicherungsflächen (91) zur Verdrehsicherung des Aufsatzteils (3) an dem Handteilhals (4) aufweist.

16. Aufsatzteil nach einem der vorhergehenden Ansprüche, wobei die Antriebswelle (8) ein Wellenkupplungsstück (63) zum Ankuppeln an eine handteilseitige Antriebswelle (5) aufweist.

17. Aufsatzteil nach dem vorhergehenden Anspruch, wobei das Wellenkupplungsstück (63) Rastmittel (64) zur Verrastung mit der handteilseitigen Antriebswelle (5) aufweist.

18. Aufsatzteil nach einem der beiden vorhergehenden Ansprüche, wobei das Wellenkupplungsstück (63) eine konische Klemmpassfläche (65) aufweist.

19. Aufsatzteil nach dem vorhergehenden Anspruch, wobei die Klemmpassfläche (65) unter einem Kegelwinkel von mehr als etwa 3,5°, vorzugsweise mehr als etwa 7° zur Längsachse der Antriebswelle (8) geneigt ist.

20. Aufsatzteil nach einem der vorhergehenden Ansprüche, wobei die Antriebswelle (8) und/oder das Wellenkupplungsstück (63) in axialer Richtung relativ zu dem rohrförmigen Anschlussstück (7) beweglich gelagert ist.

21. Aufsatzteil nach dem vorhergehenden Anspruch, wobei eine Vorspannvorrichtung (66) zum Vorspannen der Antriebswelle (8) und/oder des Wellenkupplungsstücks (63) zur Stirnseite des Anschlussstücks (7) hin vorgesehen ist.

22. Aufsatzteil nach dem vorhergehenden Anspruch, wobei die Vorspannvorrichtung (66) eine Federeinrichtung (67) zwischen dem Wellenkupplungsstück (63) und der Antriebswelle (8) aufweist.

23. Aufsatzteil nach einem der vorhergehenden Ansprüche, wobei das Innenrastelement (43) unmittelbar an einer Wandung des rohrförmigen Anschlussstücks (7) vorgesehen, insbesondere integral einstückig angeformt ist.

24. Aufsatzteil nach einem der Ansprüche 1 bis 22, wobei das Innenrastelement (63) an einem separat ausgebildeten Kupplungseinsatz (9) vorgesehen ist, der in das rohrförmige Anschlussstück (7) eingesetzt ist.

25. Aufsatzteil nach einem der vorhergehenden Ansprüche, wobei das rohrförmige Anschlussstück (7) einen vorzugsweise geschlossenen Aufsteckring zum Aufstecken auf den Handteilhals (4) besitzt.

26. Aufsatzteil nach dem vorhergehenden Anspruch, wobei der Aufsteckring konisch oder kegelig ausgebildet ist.

27. Aufsatzteil nach einem der Ansprüche 1 bis 24, wobei das Anschlussstück (7) ein schalenförmig ausgebildetes Kupplungsstück (68) zum Ansetzen an ein vorzugsweise halbschalenförmig ausgebildetes Kupplungsstück (74) des Handteilhalses (4) aufweist.

28. Zahnbürstenhandteil einer elektrischen Zahnbürste (1), mit einem Griffteil, einem Handteilhals (4), der eine Kupplungseinrichtung (10) zum Ankuppeln eines Aufsatzteils (3), beispielsweise einer Aufsatzbürste gemäß einem der Ansprüche 1 bis 27, aufweist, sowie einer Antriebswelle (5) zum Antreiben des Aufsatzteils (3), **dadurch gekennzeichnet, dass** der Handteilhals (4) innen liegende Rast- und/oder Klemmittel (70) zur Verrastung und/oder Verklemmung mit einem in den Innenraum (60) des Handteilhalses (4) einfahrbaren Element (43) des Aufsatzteils (3) aufweist.

29. Zahnbürstenhandteil nach dem vorhergehenden Anspruch, wobei die Innenrastmittel (70) eine bezüglich der Längsrichtung (12) des Handteils (2) hinterschnittene Rastkontur (48), insbesondere einen radial nach innen vorspringenden Rastvorsprung, aufweisen.

30. Zahnbürstenhandteil nach einem der beiden vorhergehenden Ansprüche, wobei die Innenrast- und/oder Klemmittel (70) an einer Innenmantelfläche des Handteilhalses (4) vorgesehen, insbesondere integral einstückig angeformt sind.

31. Zahnbürstenhandteil nach einem der vorhergehenden Ansprüche, wobei die Innenrastmittel (70) eine Rastzunge in Form eines Federbügels (71) aufweisen, der sich etwa in Längsrichtung (12) des Handteils (2) erstreckt und quer zur genannten Längsrichtung (12) elastisch verformbar ausgebildet ist.

32. Zahnbürstenhandteil nach einem der vorhergehenden Ansprüche, wobei den Innenrastmitteln (70) eine zur Längsrichtung (12) des Handteils (2) spitzwinklig geneigte Ausrastschräge vorzugsweise in Form einer Keilfläche (50) zum Lösen der Verrastung zugeordnet ist.

33. Zahnbürstenhandteil nach einem der vorhergehenden Ansprüche, wobei das Wellenkupplungsstück (69) der Antriebswelle (5) Rastmittel (72) zur Verrastung mit der Antriebswelle (8) des Aufsatzteils (3) aufweist.

34. Zahnbürstenhandteil nach einem der vorhergehenden Ansprüche, wobei das Wellenkupplungsstück (69) der Antriebswelle (5) eine konische Klemmpassfläche (73) aufweist.

35. Zahnbürstenhandteil nach dem vorhergehenden Anspruch, wobei die Klemmpassfläche (73) unter einem Kegelwinkel von mehr als etwa 3,5°, vorzugsweise mehr als etwa 7° zur Längsrichtung der Antriebswelle (5) geneigt ist.

36. Zahnbürstenhandteil nach einem der vorhergehenden Ansprüche, wobei die Antriebswelle (5) und/oder das Wellenkupplungsstück (69) in axialer Richtung relativ zu dem Handteilhals (4) beweglich gelagert ist.

37. Zahnbürstenhandteil nach dem vorhergehenden Anspruch, wobei eine Vorspannvorrichtung zum Vorspannen der Antriebswelle (5) und/oder des Wellenkupplungsstücks (69) vom Griffteil weg vorgesehen ist.

38. Zahnbürstenhandteil nach dem vorhergehenden Anspruch, wobei die Vorspannvorrichtung eine Federeinrichtung zwischen dem Wellenkupplungsstück (69) und der Antriebswelle (5) aufweist.

39. Zahnbürstenhandteil nach einem der vorhergehenden Ansprüche, wobei der Handteilhals (4) ein halbschalenförmig ausgebildetes Kupplungsstück (74) zum Ansetzen an ein vorzugsweise schalenförmig ausgebildetes Kupplungsstück (68) des Aufsatzteils (3) aufweist.

40. Zahnbürstenhandteil nach einem der vorhergehenden Ansprüche, wobei der Handteilhals (4) ein Außenkupplungsteil zur Kupplung mit einer Innenmantelfläche des Aufsatzteils (3) aufweist, wobei das Außenkupplungsteil eine konische oder kegelige Außenmantelfläche des Handteilhalses umfaßt.

41. Zahnbürstenhandteil nach einem der vorhergehenden Ansprüche, wobei an dem Handteilhals (4) eine Kupplungseinrichtung (10) mit zumindest einem Eingriffsteil (11) zur form- und/oder reibschlüssigen Verriegelung mit dem Anschlussstück (7) des Aufsatzteils vorgesehen ist, wobei die Kupplungseinrichtung (10) ein in Handteillängsrichtung (12) axial bewegbares Kupplungsstück (13) aufweist.

42. Zahnbürstenhandteil nach dem vorhergehenden Anspruch, wobei das Kupplungsstück (13) derart gelagert und/oder derart ausgebildet ist, dass eine axiale Bewegung des Kupplungsstücks (13) eine Querbewegung des Eingriffsteils (11) quer zur Handteillängsrichtung (12) erzeugt.

43. Zahnbürstenhandteil nach einem der beiden vorhergehenden Ansprüche, wobei zwischen dem Handteilhals (4) und dem Eingriffsteil (11) ein Spreizmechanismus (14) vorgesehen ist, durch den das Eingriffsteil (11) bei axialer Bewegung des Kupplungsstücks (13) auf den Handteilkorpus zu quer zur Handteillängsrichtung (12) nach außen spreizbar ist, wobei vorzugsweise der Spreizmechanismus (14) zwischen dem Handteilhals (4) und dem Kupplungsstück (13) vorgesehen ist, so dass das Kupplungsstück (13) bei Axialbewegung auf den Handteilkorpus zu nach außen spreizbar ist.

44. Zahnbürstenhandteil nach einem der vorhergehenden Ansprüche, wobei das Kupplungsstück (13) einen an ein Gegenstück am Aufsatzteil form- und lageangepassten Einfangabschnitt (19) zum Einfangen des genannten Gegenstücks am Aufsatzteil beim Aufschieben des Aufsatzteils auf den Handteilhals (4) und zum axialen Verschieben des Kupplungsstücks (13) aufweist, wobei vorzugsweise der Einfangabschnitt (19) eine sich quer zur Handteillängsrichtung (12) erstreckende Stoßfläche (20) aufweist.

45. Zahnbürstenhandteil nach einem der vorhergehenden Ansprüche, wobei Hemmmittel (23) zum Hemmen, Blockieren, Bremsen und/oder Abschalten des Zahnbürstenantriebs, wenn das Eingriffsteil (11) der Kupplungseinrichtung (10) in einer von dessen Verriegelungsstellung abweichender Stellung ist, vorgesehen sind.

46. Zahnbürstenhandteil nach dem vorhergehenden Anspruch rückbezogen auf Anspruch 41, wobei die Hemmmittel (23) eine Eingriffsfläche an dem Kupplungsstück (13), die in der eingefahrenen Nicht-Verriegelungsstellung des Kupplungsstücks (13) mit einer Antriebswelle des Handteils (2) in Eingriff bringbar ist, aufweisen, wobei vorzugsweise die Hemmmittel (23) eine mantelflächenseitige Abflachung an dem Kupplungsstück (13) umfassen, die gegen eine ebenfalls mantelflächenseitig vorgesehene Abflachung der Antriebswelle des Handteils (2) fahrbar ist, aufweist.

47. Zahnbürstenhandteil nach einem der beiden vorhergehenden Ansprüche, wobei eine vorzugsweise elektronische Abschaltvorrichtung (33) zur Abschaltung des Antriebsmotors bei Hemmung der Antriebswelle (5) aufweist.

48. Zahnbürstenhandteil nach dem vorhergehenden Anspruch, wobei die Abschaltvorrichtung (33) Erfassungsmittel (32) zur Erfassung des Motorstroms und Abschaltmittel zur Abschaltung des Antriebsmotors bei Überschreiten eines vorbestimmten Motorstroms aufweist.

49. Elektrische Zahnbürste mit einem Zahnbürstenhandteil gemäß einem der Ansprüche 28 bis 48 und einem Aufsatzteil nach einem der Ansprüche 1 bis 27.

50. Kupplung zum Kuppeln eines Aufsatzteils für eine elektrische Zahnbürste mit einem Handteil der elektrischen Zahnbürste wobei sowohl das Aufsatzteil als auch das Handteil mit aufeinander abgestimmten Kupplungsmitteln versehen sind, **dadurch gekennzeichnet, daß** das Aufsatzteil ein Element (43) zum Einfahren in den Innenraum (60) des Handteils aufweist, und daß das Handteil innen liegende Rast- und/oder Klemmittel (70) zur Verrastung und/oder Verklemmung mit dem in den Innenraum (60) des Handteils einfahrbaren Element (43) des Aufsatzteils (3) aufweist.

51. Kupplung nach Anspruch 50, **dadurch gekennzeichnet, daß** das Aufsatzteil die Merkmale eines der Ansprüche 1 bis 27 und das Handteil die Merkmale eines der Ansprüche 28 bis 48 aufweist.
